# EUROPEAN PATENT SPECIFICATION

(11) **EP 3 198 983 B1**
(45) Date of publication and mention of the grant of the patent: **02.01.2019**
(21) Application number: 14809993.0
(22) Date of filing: 26.09.2014
(51) Int. Cl.: H04W 76/22, H04W 28/24, H04W 76/12

(54) **METHOD FOR MANAGING TRANSPORT TUNNELS OF PACKET DATA SERVICES IN A LTE TELECOMMUNICATION NETWORK AND NETWORK ARCHITECTURE IMPLEMENTING SUCH METHOD**
VERFAHREN ZUR VERWALTUNG VON TRANSPORTTUNNELN VON PAKETDATENDIENSTEN IN EINEM LTE-TELEKOMMUNIKATIONSNETZWERK UND NETZWERKARCHITEKTUR DAMIT
PROCÉDÉ DE GESTION DE TUNNELS DE TRANSPORT DE SERVICES DE DONNÉES PAR PAQUETS DANS UN RÉSEAU DE TÉLÉCOMMUNICATIONS LTE ET ARCHITECTURE DE RÉSEAU METTANT EN OEUVRE UN TEL PROCÉDÉ

(43) Date of publication of application: 02.08.2017
(73) Proprietor: Leonardo S.p.A., 00195 Roma (IT)
(72) Inventor: SPINACCI, Luca, I-16148 Genova (IT)
(74) Representative: Carangelo, Pierluigi
(86) International application number: PCT/IT2014/000256
(87) International publication number: WO 2016/046851

(56) References cited:
- WO-A1-2013/182935
- WO-A2-2008/008990
- US-A1- 2004 174 865
- "3rd Generation Partnership Project; Technical Specification Group Services and System Aspects; Policy and charging control architecture (Release 13)", 3GPP DRAFT; 23203-D10_WITH_23203_CR0914_CRS_IMPLEMENTE D, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 17 September 2014 (2014-09-17), XP050923667, Retrieved from the Internet: URL:http://www.3gpp.org/ftp/tsg_sa/WG2_Arc h/Latest_SA2_Specs/DRAFT_INTERIM/Archive/ [retrieved on 2014-09-17]

## Description

The present invention refers to the management techniques of the transportation of packet data services in a telecommunication network, in particular, to a method for managing transport tunnels of packet data services in a LTE technology telecommunication network.

The present invention further refers to a network architecture configured to implement such method.

There are telecommunications networks of the professional type that are referred as crucial as regards the general management of data traffic, in particular, data service transportation.

An example of such type of networks is the professional telecommunications network TETRA (from the English acronym, *Terrestrial Trunked Radio*), i.e., the dedicated telecommunications network that is used in the professional field, for example by law enforcement agencies (police, fire departments, and so on), by hospital entities, first aid facilities, and so on.

The professional telecommunications network TETRA, which initially was a circuit mode network, underwent an evolution over the years, and it can be now implemented also as a packet network, i.e., a so-called IP network (from the English acronym, *Internet Protocol*), i.e., as a Full-IP network infrastructure.

The professional telecommunications network TETRA has determined characteristics in order to ensure determined types of data services (for example, group calls).

A limitation of such type of network is related to the data transmission band capacity available, especially in view of being able to support, by professional users, further broad-band data services.
multimedia data services, in particular, they are not able to support the most evolved data services, such as high-definition multimedia videos.

In order to overcome these limitations, it has been decided to migrate the determined services, also in the professional field, towards a more evolved telecommunications network, even if typically commercial, such as a telecommunications network 4G, i.e., the LTE technology telecommunications network (from the English acronym, *Long Term Evolution*).

In fact, the LTE technology is considered as the technology that, also in the next years, both on a commercial and a professional viewpoint, will be the most suitable to meet the required needs.

As it is known, the LTE technology, compared to the previous 3G standards (3GPP, from the English acronym, *3rd Generation Partnership Project*), for example, UMTS (from the English acronym, *Universal Mobile Telecommunications System*), with a circuit mode technology, is instead a Full-IP packet technology.

Furthermore, at the regulations level, the LTE technology was characterized in a very detailed manner in terms quality of service.

In this regard, a concept of quality of service was defined which allows, depending on the type of data service required by a user (professional or not professional), characterizing the packet data processing for the required service in the most suitable manner.

This concept was standardized by defining, in the so-called *Evolved Packet System* (EPS) the so-called EPS bearers, i.e., packet data traffic tunnels within a LTE-technology telecommunications network, to which, in terms of quality of service, determined characteristics are assigned, applied on both the radio segment and the IP transportation segment, for one or more packet data services required by a user. Such transport bearers are built between each User Equipment (UE, from the English acronym, *User Equipment*) and the access network (E-UTRAN, from the English acronym, *Network*) *GateWay*) of the packet data traffic transportation and management network (EPC, from the English acronym *Evolved Packet Core).*

However, the definition and set-up of such transport bearers requires both signaling operations between the several elements of the architecture involved in the data traffic management (user terminals, access network, packet data traffic transportation and management network) and operations necessary for the creation of such bearers. All of this, of course, involves a commitment of the involved network elements especially on a computational viewpoint.

Furthermore, each time the operative conditions require it, it is necessary to "destruct" or "pre-empt" the bearers previously built and to build new ones.

It shall be apparent that, in the case that many bearers are open per packet data services of a different type, among multiple user terminals (UE) and the E-UTRAN access network, the impact that would be on the computational performance of the network in having to pre-empt such bearers and creating new ones will increase as the number of bearers and the number of user terminals increase.

Furthermore, there would be a need for pre-empting also the bearers built between the E-UTRAN access network and the packet data traffic management network EPC. Also in this case, the pre-emption and construction of other bearers may involve a high commitment on a computational viewpoint for the EPC network.

An increase of the computational load is inevitably aimed to degrade the performance of the packet data services offered by the network from a quality of service viewpoint (for example, loss of data packets, delay, delay change, and so on).

Document WO 2008/008990 discloses a method for managing transport tunnels of packet data services usable by a user in a LTE technology telecommunications network.

The drawbacks stated above, which are already critical for the voice and data services in a LTE-technology telecommunications network of the professional services.

In fact, during critical events in which many roaming professional users could need to use both advanced data services (for example, high-definition videos) and standard services (for example, a voice service), the processing operations required for the management of a high number of bearers risk to compromise the quality of service necessary for the service or the data services of the network.

The object of the present invention is to devise and provide a method for managing transport tunnels of packet data services in a LTE-technology telecommunication network that allows at least partially obviating the drawbacks set forth above with reference to the prior art.

Such object is achieved by a method for managing transport tunnels of packet data services in accordance with the claim 1.

It is the object of the present invention also a network architecture, as defined by the independent claim 12, implementing such method.

Further characteristics and advantages of the method according to the invention will be apparent from the description set forth below of preferred embodiment examples, given by way of illustrative, non-limiting example, with reference to the appended figures, in which:
- Fig. 1 schematically illustrates, by a block diagram, from a logic viewpoint, a network architecture according to an embodiment of the present invention;
- Fig. 2 schematically illustrates, by a further block diagram, on a further logic viewpoint and a protocol viewpoint, the network architecture of Fig. 1;
- Fig. 3 schematically illustrates, from a logic viewpoint, data packets transportable in the network architecture of Fig. 1;
- Fig. 4 schematically illustrates, by a block diagram, a method for managing transport tunnels in accordance with an embodiment of the present invention; 1, obtained by implementing the method for managing transport tunnels according to an embodiment of the invention, and
- Fig. 6 illustrates a table representative of an aspect of the method for managing transport tunnels, according to a further embodiment of the invention.

It is pointed out that, in the figures, the like or similar elements are indicated by the same numeric and/or alphanumeric references.

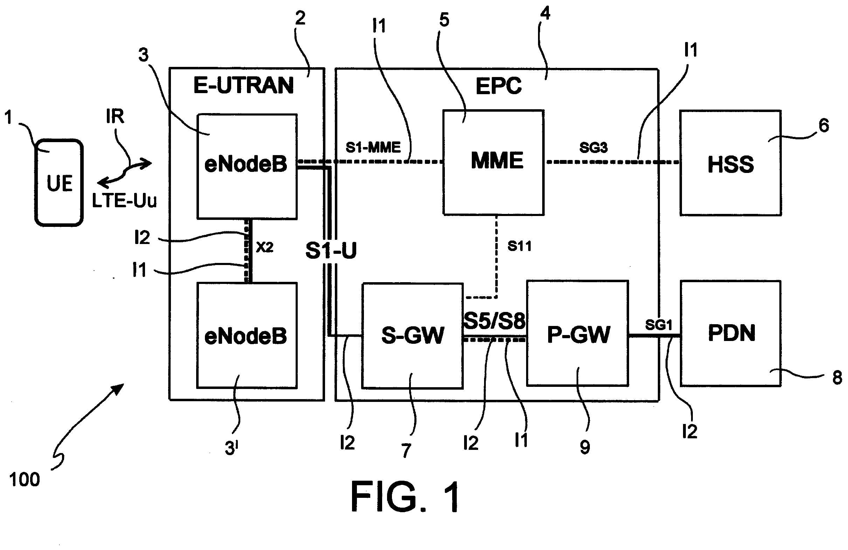

With particular reference to Fig. 1, a network architecture or infrastructure is now described, generally indicated with the numeral reference 100, in which the method for managing transport tunnels (bearers) of packet data services according to the present invention can be implemented.

The network architecture or infrastructure 100, herein below also referred to as network architecture, or simply network, is preferably in LTE (*Long Term Evolution*) technology.

Such network architecture 100 can be configured for use in the commercial field or for use in the professional field, or both.

It is pointed out that by network in the commercial field is meant the standard telecommunications network used by standard users, while by network in the professional field is meant a telecommunications network used in the professional field, for example, by law enforcement agencies (police, fire departments, and so on), by hospital entities, first aid facilities, and so on.

The network architecture 100 comprises at least one user equipment UE 1.

The user equipment 1 is, for example, a mobile electronic device, such as, by non-limiting example, a cell phone, a smartphone, a tablet, a mobile computer (notebook), a palmtop computer of the PDA (Personal Digital Assistant) type, and so on.

The network architecture 100 further comprises an E-UTRAN to the E-UTRAN access network 2.

In more detail, the user equipment UE 1 is operatively connected to the E-UTRAN access network 2 by an interface of the radio IR LTE-Uu type.

The E-UTRAN access network 2 comprises at least one first access network apparatus (eNodeB, *evolved Node B*) 3. Such at least one first access network apparatus 3, typically a Base Transceiver Station BTS, integrates all the control functionalities thereof.

It shall be noticed that the E-UTRAN access network 2, besides said at least one first access network apparatus 3, comprises a plurality of access network apparatuses, each being completely similar to said at least one first access network apparatus 3. In Fig. 1, by way of non-limiting example, the E-UTRAN access network 2 comprises at least one second access network apparatus (eNodeB) 3'.

The user equipment UE 1 is configured to be operatively connected to said at least one first access network apparatus 3 of the E-UTRAN access network 2. In addition, the User Equipment UE 1 is also configured to be operatively connected to any of the access apparatuses of said plurality of access network apparatuses, for example, to said at least one second access network apparatus 3'.

Said at least one first access network apparatus 3 and said at least one second access network apparatus 3', and generally all the access network apparatuses of the above-mentioned plurality of access network apparatuses, are mutually operatively connected by a first interface of the logic type I1 for the transportation of the Control plane C-plane necessary to create the data transport flow (for example, set up messages of the transportation part), and a second interface of the logic type I2 for the transportation of the User plane U-Plane.

It shall be noticed that the messages that are transmitted separately, at the logic level, on the first interface of the logic type I1 and on the second interface of the logic type I2 could be transmitted, at the physical interface of the logic type I1 and the second interface of the logic type I2 are part of a same interface of the logic type X2.

In Fig. 1, between said at least one first access network apparatus 3 and said at least one second network apparatus 3', the first interface of the logic type I1 is represented by a hatched line, while the second interface of the physical type I2 is represented with a continuous line.

The network architecture 100 further comprises a packet data traffic management network EPC (Evolved Packet Core) 4 operatively connected to said E-UTRAN access network 2.

The E-UTRAN access network 2 and the packet data traffic management network EPC 4 are a part of the so-called Evolved Packet System, EPS.

In more detail, the packet data traffic management network EPC 4 comprises a Mobility Management Entity MME 5, herein below also simply entity MME 5.

As illustrated in Fig. 1, the entity MME 5 is operatively connected to said E-UTRAN access network 2, for example, to said at least one first access network apparatus 3, by a corresponding first interface of the logic type I1, S1-MME (also illustrated by a hatched line), used for the transportation of the Control plane (C-plane).

The network architecture 100 further comprises a entity HSS (from the English acronym, *Home Subscriber Database*) 6, operatively connected to the packet data traffic management network EPC 4.

The entity HSS 6 is a server of the operator, which provides packet data services to the users, comprising information regarding the subscriptions of the users and configured to carry out the functions that are necessary to the management of the packet data services of the users.

The entity HSS 6 is operatively connected to the packet data traffic management network EPC 4 by a corresponding first interface of the logic type I1 SG3 (also represented by a hatched line) for the transportation of

Referring back to the packet data traffic management network EPC 4, it further comprises at least one first data traffic management gateway 7, which could typically carry out router functions.

Said at least one first data traffic management gateway 7 is operatively connected to said Mobility Management Entity MME 5 by a corresponding first interface of the logic type I1 S11 (also represented by a hatched line), used for the transportation of the Control plane (C-plane).

Furthermore, said at least one first data traffic management gateway 7 is operatively connected to the E-UTRAN access network 2, for example, to said at least one first access network apparatus 3, by a corresponding second interface of the logic type I2 S1-U (represented with a continuous line), used for the transportation of the packet data traffic.

The interface of the logic type called S1-U is traceable in the specifications 3GPP TS 36.300 for the E-UTRAN access network and 3GPP TS 23.401 for the data traffic management network EPC.

In the embodiment of Fig. 1, said at least one first data traffic management gateway 7 is the so-called S-GW, from the English acronym *Serving-GateWay*, configured to the routing of the Control plane (C-plane) and of the data traffic.

The network architecture 100 further comprises at least one packet data service network PDN (Packet Data Network) 8 configured to provide data services on demand by a user, by said at least one user equipment UE 1.

The packet data service network PDN 8 is the service network of an operator, for example, a telephone operator, who provides precisely packet data services, also advanced, in the commercial field or in the professional field, or both.

As illustrated also in Fig. 1, the packet data traffic management network EPC 4 is operatively interposed between the E-UTRAN access network 2 and the packet data service network PDN 8.
9, also typically a router.

Said at least one second data traffic management gateway 9 is operatively interposed between said at least one first data traffic management gateway 7 and said packet data service network PDN 8.

In particular, said at least one second data traffic management gateway 9 is operatively connected to said at least one first data traffic management gateway 7 by a corresponding first interface of the logic type I1 and a corresponding second interface of the logic type I2 (respectively illustrated by a hatched line and a continuous line), for the transportation of the Control plane (C-plane) (I1) and the packet data traffic (I2).

Also in this case, the interface of the logic type called S5, of which the first interface of the logic type I1 and the second interface of the logic type I2 are a part, is detailed in the specifications 3GPP TS 36.300 and 3GPP TS 23.401.

Furthermore, said at least one second data traffic management gateway equipment 9 is operatively connected to the packet data service network PDN 8 by a corresponding second interface of the logic type I2 SGi, for the transportation of data traffic.

In the embodiment of Fig. 1, said at least one second data traffic management gateway 9 is the so-called P-GW, from the English acronym *PDN-GateWay*, configured to the routing of the data traffic coming from the packet data service network PDN 8.

It is pointed out that the embodiment of Fig. 1 shows a network architecture 100, in which the reference points for the present invention are the second interface of the logic type S1-U between said at least one access network apparatus 3 of the E-UTRAN access network 2 and said at least one first data traffic management gateway 7 (S-GW) and the second interface of the logic type I2 between said at least one first data traffic management gateway 7 (S-GW) and said at least one second data traffic management gateway 9 (P-GW), represents a "non-roaming" network

In accordance with other embodiments, not shown in the figures, the network architecture 100 may comprise other and additional interfaces of the logic type which can be considered as reference points for the present invention, as long as they allow the network carrying out the same actions relative to the packet data traffic transportation, independently from the fact that they belong to other network architectures defined in different current or future specifications 3GPP.

By way of example, the network architecture 100, in accordance with a further embodiment, again defined based on the specification 3GPP TS 23.401, can be configured to the roaming packet data traffic management. In such a case, to the purposes of the present invention, a reference point is a further interface of the logic type S8 between said at least one first data traffic management gateway 7 (S-GW) and said at least one second data traffic management gateway 9 (P-GW).

Referring back again to the embodiment of Fig. 1, the packet data traffic management network EPC 4 comprises said at least one first data traffic management gateway 7 (S-GW) and said at least one second data traffic management gateway 9 (P-GW), which are mutually distinct and configured, respectively, to route the packet data traffic from said at least one second data traffic management gateway 9 (P-GW) to the E-UTRAN access network 2, by said at least one first data traffic management gateway 7 (S-GW), and to route the data traffic from said packet data service network PDN 8 and said at least one first data traffic management gateway 7 (S-GW), by said at least one second data traffic management gateway 9 (P-GW).

In this regard, said at least one first data traffic management gateway 7 (S-GW) is configured to the management of transport tunnels (bearers) of data services in accordance with the management method that is the object of the present invention, described herein below.

Furthermore, in the embodiment of Fig. 1, also said at least one management method that is the object of the present invention, described herein below.

In a further embodiment (not shown in the figures), alternative to the one described above, the data traffic management network EPC 4, especially in the case that the network to be managed has reduced dimensions, may comprise only one functional entity, such as a data traffic management gateway, for example, said at least one first data traffic management gateway 7 (or said at least one second data traffic management gateway 9), configured, in hardware or in software, for example on the same server, to carry out the functions of both said at least one first data traffic management gateway 7 S-GW and said at least one second data traffic management gateway 9 P-GW, described separately above with reference to the embodiment of Fig. 1.

Therefore, at a general level, said at least one first data traffic management gateway 7 (or 9) is operatively interposed between said at least one first access network apparatus (eNodeB) and said at least one packet data service network PDN 8. Said at least one first data traffic management gateway 7 (or 9) is a functional entity configured, in hardware and/or in software on an apparatus, to carry out the functions of the gateway S-GW and the gateway P-GW.

Also in this embodiment, said at least one first data traffic management gateway 7 (or 9) is configured to the management of transport tunnels (bearers) of packet data services in accordance with the management method that is the object of the present invention, described herein below.

Furthermore, in this embodiment, said at least one first data traffic management gateway 7 (or 9) is operatively connected: to the Mobility Management Entity MME 5 by a corresponding first interface of the logic type S11 for the transportation of the Control plane (C-plane); to the E-UTRAN access network 2, in particular, to said at least one first access PDN 8 by a corresponding interface of the logic type SG1 for the packet data traffic transportation.

Furthermore, in other embodiments, the number of functional elements of the network architecture 100 can be different according to the intended use of the network (the commercial or the professional field).

For example, in the case that the network 100 is intended to the commercial field (an embodiment not shown in the figures), in which the E-UTRAN access network 2 comprises a plurality of access apparatuses eNodeB, completely similar to said at least one first access network apparatus 3, the data traffic management network EPC 4 comprises one or more gateways S-GW and one or more gateways P-GW, as a function of the number of packet data service networks PDN that require to be operatively connected to the packet data traffic management network EPC 4.

In accordance with a further embodiment (not shown in the figures), an access network apparatus eNodeB, for example, said at least one first access network apparatus 3, can be operatively connected to a first packet data traffic management network EPC configured for use in the commercial field (network of a marketing operator) and a second packet data traffic management network EPC configured for use in the professional field (network of the professional operator).

In such a case, according to the type of service required by a user, by said access network apparatus eNodeB, a routing policy will be provided, by the access network apparatus, such as to route the request to the first packet data traffic management network EPC (network of the marketing operator) or the second packet data traffic management network EPC (network of the professional operator).

It is pointed out that the network architecture 100 of the embodiment of Fig. 1 allows the traffic of data services of the point-to-point type.

In fact, in the case that a request of service is accepted, said at type (those that are represented in Fig. by a continuous line), for each User Equipment UE that required that type of service. Therefore, the connection between the packet data traffic management network EPC 4 and each User Equipment is precisely of the point-to-point type.

In accordance with a further embodiment, not shown in the figures, the network architecture is configured to the management of services, allowing establishing corresponding connection, of the multi-cast type.

In fact, according to this embodiment, the network architecture further comprises a further functional logic entity, i.e., a further data traffic management gateway eMBMS (from the English acronym, *evolved Multicast Broadcast Multimedia Service*), operatively connected between the packet data service network PDN 8 and the E-UTRAN access network 2.

In more detail, the further data traffic management gateway eMBMS is operatively connected to the E-UTRAN access network by a corresponding second interface of the logic type M1, completely similar to the second interface I2 S1-U of Fig. 1, for the transportation of the packet data traffic.

It is pointed out that such second interface of the logic type M1, defined in the specification 3GPP TS 23.246, is also to be considered as a possible reference point for the present invention.

Furthermore, the further data traffic management gateway eMBMS is operatively connected to the packet data service network PDN by a corresponding second interface of the logic type, completely similar to the second interface I2 SGi of Fig. 1, for the transportation of the data traffic.

Such further data traffic management gateway eMBMS is configured to receive in a single flow the data coming from the packet data service network PDN and to send such data, instead by a plurality of transport tunnels, by a single transport tunnel to the access network E-UTRAN, i.e., to an access apparatus eNodeB which, in turn, in multi-cast come.

In this embodiment, in an up-link direction between each user equipment UE and the packet data traffic management network EPC, a transport tunnel (bearer) is present for each user equipment, while in the down-link direction between a further packet data traffic management network eMBMS and each user equipment UE a single transport tunnel (bearer) is present, which is generated by the further data traffic management gateway eMBMS, between the same and the access network E-UTRAN.

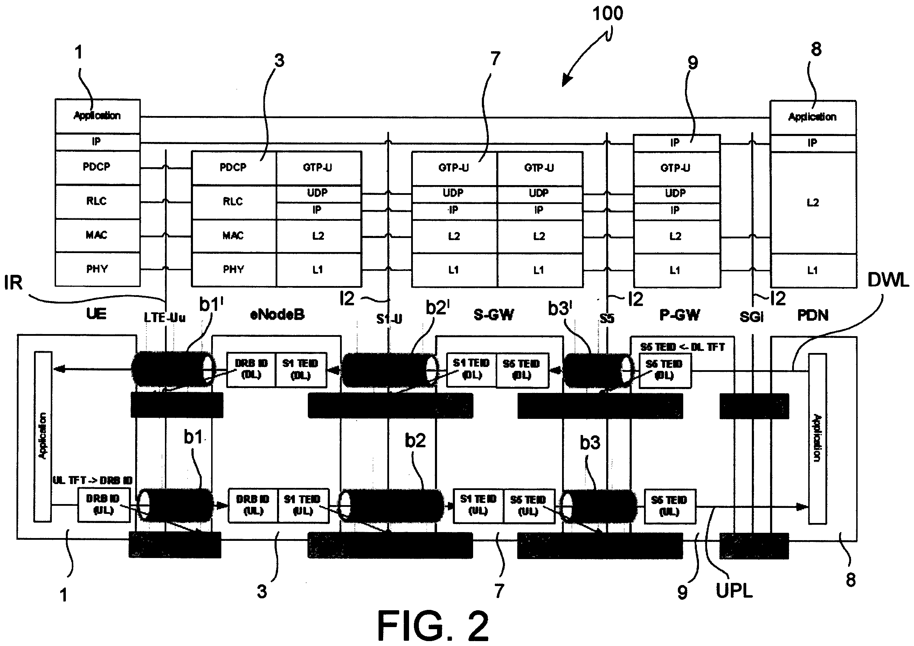

With reference to Fig. 2, the network architecture 100 is illustrated, by a block diagram, both on a further logic viewpoint (lower portion of Fig. 2) and on a protocol viewpoint (upper portion of Fig. 2).

From the left to the right side, in the scheme of Fig. 2, there are illustrated, respectively:
- the at least one user equipment UE 1;
- the interface of the radio IR LTE-Uu type between the at least one user equipment UE and the E-UTRAN access network 2;
- the at least one first access network apparatus eNodeB 3 belonging to the E-UTRAN access network 2;
- the second interface of the logic type I2 S1-U between said at least one first access network apparatus eNodeB 3 and the packet data traffic management network EPC 4;
- said at least one first data traffic management gateway 7 (S-GW) belonging to the packet data traffic management network EPC 4;
- the second interface of the logic type I2 S5 between said at least one first data traffic management gateway 7 (S-GW) and said at least one second data traffic management gateway 9 (P-GW), also belonging to the data traffic management network EPC 4;
- the at least one second data traffic management gateway 9 (P-GW) of the data traffic management network EPC 4;
   data service network PDN 8;
- the packet data service network PDN 8;

As stated above, in the upper portion of Fig. 2, the network architecture 100 is illustrated from a protocol viewpoint, i.e., each functional entity, listed above, is illustrated by the corresponding communication protocol by indicating, at each level of the communication protocol, the reference acronym.

In the lower portion of Fig. 2, the network architecture 100 is illustrated from a logic viewpoint by a further block diagram.

In particular, in accordance with Fig. 2, the network architecture 100 is configured to establish:
- an up-link communication channel, indicated with the reference UPL, between said at least one user equipment UE 1 and the packet data service network PDN 8;
- a down-link communication channel, indicated with the reference DWL, between the packet data service network PDN 8 and said at least one user equipment UE 1.

From a logic viewpoint, in the up-link communication channel UPL, a transport tunnel (bearer) of packet data traffic in up-link can be defined, comprising:
- a first part of data traffic transport tunnel b1 between said at least one user equipment UE 1 and said at least one access network apparatus eNodeB 3, defined therefore on the interface of the radio IR LTE-Uu type (in the specification 3GPP TS 23.401, such part of transport tunnel is defined "radio bearer");
- a second part of data traffic transport tunnel b2 between said at least one access network apparatus eNodeB 3 and said at least one first data traffic management gateway 7 (S-GW), defined therefore on the corresponding second interface of the logic type I2 S1-U for the transportation of data traffic (in the specification 3GPP TS 23.401, such part one first data traffic management gateway 7 (S-GW) and said at least one second data traffic management gateway 9 (P-GW), defined therefore on the corresponding second interface of the logic type I2 S5 for the transportation of data traffic (in the specification 3GPP TS 23.401, such part of transport tunnel is defined "S5/(S8) bearer").

In a completely similar manner, in the down-link communication channel DWL a down-link packet data traffic transport tunnel (bearer) can be defined, comprising:
- a first part of data traffic transport tunnel b3' between said at least one second data traffic management gateway 9 (P-GW) and said at least one first data traffic management gateway 7 (S-GW), defined therefore on the corresponding second interface of the logic type I2 S5 for the transportation of data traffic (in the specification 3GPP TS 23.401, such part of transport tunnel is defined "S5/(S8) bearer");
- a second part of data traffic transport tunnel b2' between said at least one first data traffic management gateway 7 (S-GW) and said at least one access network apparatus eNodeB 3, defined therefore on the corresponding second interface of the logic type I2 S1-U for the transportation of data traffic (in the specification 3GPP TS 23.401, such part of transport tunnel is defined "S1-U bearer");
- a third part of data traffic transport tunnel b1', between said at least one access network apparatus eNodeB 3 and said at least one User Equipment UE 1, therefore defined on the interface of the radio IR LTE-Uu type (in the specification 3GPP TS 23.401, such part of transport tunnel is defined "radio bearer").

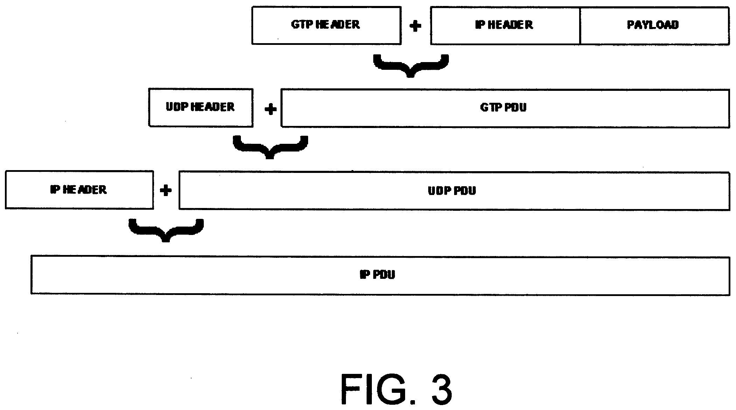

It shall be noticed that in the lower portion of Fig. 2 and also in Fig. 3, the protocol stack is illustrated relating to both the up-link communication channel UPL and the down-link communication channel DWL.

It can be noticed that, in the up-link communication channel UPL, the first part of transport tunnel b1 (radio bearer), the second part of

The communication protocol used for the data traffic transportation is GTP, from the English acronym *GPRS Tunneling Protocol*.

It is pointed out that, as stated above, the present invention refers to the management of packet data traffic, therefore to the so-called transport tunnels (bearers) GTP-U (*GTP-User plane*), as indicated also in the specification 3GPP TS 29.281, which are necessary to allow transporting packet data through the functional entities along the up-link communication channel UPL and along the down-link communication channel DWL.

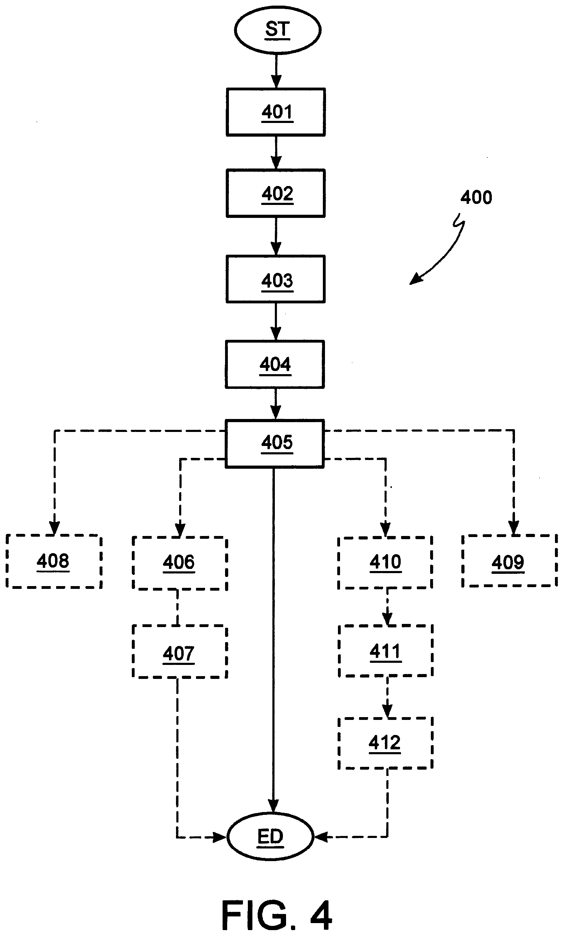

Now referring also to the Figs. 4-6, a method for managing transport tunnels (bearers) of packet data services usable by a user in a LTE-technology telecommunication network is now described, according to an embodiment of the present invention.

It shall be noticed that, in Fig. 4, the method for managing transport tunnels of packet data services, herein below by the sake of brevity also management method, or simply method, is generally indicated with the numeral reference 400.

It is pointed out that the LTE-technology telecommunications network within which the management method 400 can be used can be, for example, the network architecture 100, described above, according to different embodiments.

Examples of packet data services exchanged with the packet data service network PDN 8 can be:
- voice service (for example, *Conversational Voice*);
- video service (for example, *Conversational Video, Live Streaming*);
- real-time time gaming service (for example, *Real Time Gaming*);
- non-real-time time gaming service (for example, Non-*Conversational Video* - *Buffered Streaming*);
- IMS signaling (for example, *IMS Signalling*);
- services based on TCP (for example, *Video in Buffered Streaming TCP based- www., e-mail, chat, sharing,* and so on).
Service, QoS) having determined values.

In more detail, the EPS level quality of service QoS is defined by an identifier referred to as QCI, from the acronym QoS (*Quality of Service*) *Class Identifier,* of the standard type.

To the purposes of the present description, by the phrase standard identifier QCI is meant each of the identifiers QCI defined in the specification (standard) 3GPP TS 23.203.

Each standard identifier QCI is a scalar value that, as defined according to the regulations, hence to the specification or standard, may have nine different values, 1 to 9. Each standard identifier QCI is associated to a set service packet data usable by a user.

The determined characteristics of quality of service to be ensured for a set packet data service to which they are associated are associated to each standard identifier QCI of a set packet data service.

The set characteristics of quality of service, for each packet data service, comprise:
- type of band available upon data transmission or resource type (*Resource Type*), i.e., the indication whether the data service transport tunnel to be used for a set packet data service, in terms of propagation speed of the packet data, can be a guaranteed band GBR (*Guaranteed Bit Rate*) or a non-guaranteed band Non-GBR (*Non-Guaranteed Bit Rate*);
- maximum delay allowed upon data transmission, PDB (*Packet Delay Budget*), for a set packet data service, expressed for example in milliseconds;
- maximum limit allowed of packet data loss upon data transmission, PELR (*Packet Error Loss Rate*), expressed as a non-dimensional number;
- priority level upon data transmission PRIO (*Priority*), i.e., the level of importance (or precedence) upon data transmission of the set packet data service (to which a set priority level is associated), expressed by a scalar value 1 to 9.
GBR, other standard QCI identifiers can have non-guaranteed band Non-GBR, assigned according to the set packet data service to which they are associated;
- the standard QCI identifiers can have a maximum delay allowed upon data transmission PDB (that may be different or the same one to another), assigned according to the set service data to which they are associated;
- the standard QCI identifiers can have a maximum limit allowed of packet data loss upon data transmission PELR (that may be different or the same one to another), assigned according to the set packet data service to which they are associated;
- each standard identifier QCI may have a corresponding priority level upon data transmission PRIO (different from that of the other standard QCI identifiers), assigned according to the set packet data service to which it is associated.

From a logic viewpoint, the network architecture 100, for example, the scheduler that is present in each of the functional entities eNodeB described above, is configured, in hardware and/or in software, to allow, based on the specification 3GPP TS 23.203, the management of the data traffic transport tunnels (bearers) in accordance with the value of QCI standard associated to the packet data service required in the up-link communication channel UPL from said at least one user equipment UE 1 to said packet data service network PDN 8 and delivered in the down-link communication channel DWL from said packet data service network PDN 8 to said at least one user equipment UE.

In fact, a standard QCI identifier is associated to each data traffic transport tunnel (bearer) of one or more data services.

In order to solve the technical problem defined in the present description, the Applicant noticed the possibility to aggregate types of different packet data services within the same data traffic transport tunnel

To this aim, it shall be noticed that the technical specification 3GPP TS 23.203 defines the standard QCI identifiers (1-9) introduced above, but a plurality of values (ranging between 128 and 254) is anyhow guaranteed, which values can be used for the definition of so-called proprietary QCI identifiers, i.e., operator-specific QCI identifiers (as set forth in the technical specification 3GPP TS 29.212).

This allows both associating standard QCI identifiers to packet data services, in the case that such packet data services are intended to be transmitted on a pre-existing network architecture the apparatuses of which are configured to manage data traffic of packet data services only with standard QCI identifiers, and associating proprietary QCI identifiers to packet data services, in the case that such packet data services are intended to be transmitted on a network architecture the apparatuses of which are configured to manage the data traffic of packet data services with proprietary QCI identifiers.

Furthermore, also the possibility is allowed, to associate standard QCI identifiers to some packet data services and proprietary QCI identifiers to other packet data services. In this case, the network architecture on which such packet data services can be transmitted comprises apparatuses configured to manage the data traffic of packet data services both with standard QCI identifiers and with proprietary QCI identifiers.

At a general level, a proprietary QCI identifier represents the characteristics of quality of service applied to a transport tunnel (bearer) for the traffic of packet data services that are mutually aggregated, associated to a same proprietary QCI identifier.

To the purposes of the present description, a proprietary QCI identifier will be indicated herein below also by the phrase aggregated QCI identifier.

In more detail, in the aggregated (proprietary) QCI identifier, each set characteristic of quality of service to be ensured for the aggregated identifiers for the packet data services which are now aggregated.

The selection (hence, generally, aggregation) mode will be described in detail herein below with particular reference to the method 400 in accordance with the present invention.

It is pointed out that the aggregation mode and the definition of proprietary QCI identifiers proposed allows however to be in any case compliant to the specification TS 23.203 and to be in line, therefore not in opposition, with the values defined for the standard QCI identifiers, so as to allow, as stated above, to be able to transmit the aggregated data services also on network architectures configured to manage the traffic of packet data services with standard and/or proprietary QCI identifiers.

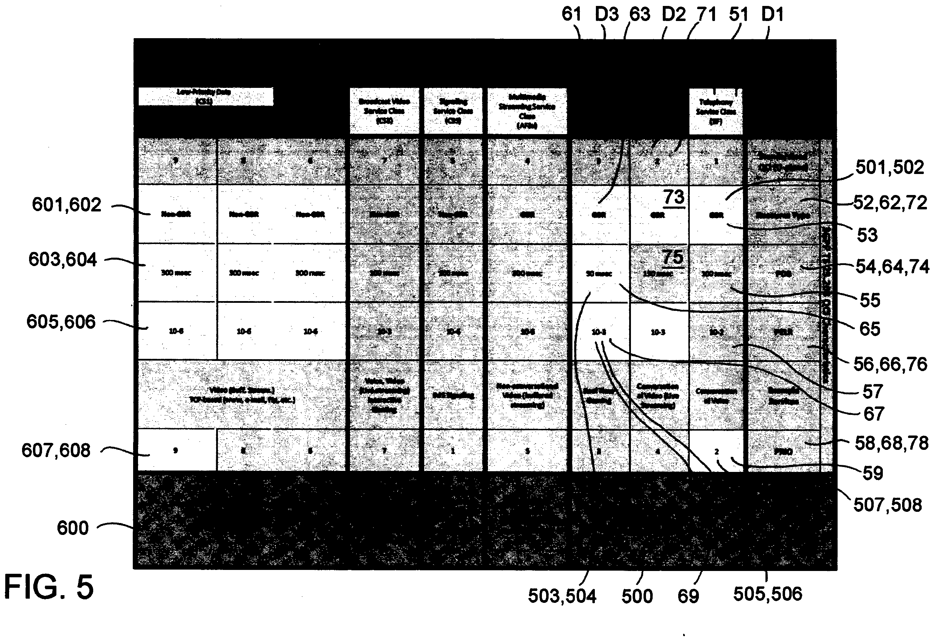

Referring back to the method 400 of Fig. 4, with reference also to the Fig. 5, the method 400 comprises a symbolic step of starting ST.

The method 400 further comprises an step of identifying 401 a first packet data service 51 defined by a set first characteristic of quality of service 52 having a set first value 53.

The first packet data service 51 can be, for example, a telephone voice service; the set first characteristic 52 of the first packet data service 51 can be, for example, the type of data transmission band; the set first value 53 of the set first characteristic 52 of the first packet data service 51 can be, for example, in the case of the telephone voice service, guaranteed data transmission band GBR (Fig. 5).

The first packet data service 51 is further defined by at least one set second characteristic of quality of service 54 having a corresponding second value 55.

The set second characteristic of quality of service 54 of the first packet data service 51 can be, in the embodiment of Figs. 4 and 5, the maximum delay allowed upon data transmission PDB.

In other embodiments, the set second characteristic of quality of service 54 of the first packet data service 51 can be the maximum limit

Referring back to the Fig. 5, the corresponding second value 55 of the set second characteristic of quality of service 54 is, for example, 100 ms (Fig. 5).

Referring back again to Fig. 4, the method 400 further comprises a step of identifying 402 at least one second packet data service 61 defined by a set further first characteristic of quality of service 62 having a corresponding further first value 63.

The second packet data service 61 can be, for example, a real-time interactive service; the set further first characteristic of quality of service 62 of the second data service 61 can be, for example, the type of data transmission band (Fig. 5).

In accordance with the embodiment of Fig. 5, the further first value 63 of the further first characteristic of quality of service 62 of the second packet data service 61 is equal to the set first value 53 of the first characteristic of quality of service 52 of the first packet data service 61.

Such at least one second packet data service 61 is defined by at least one further set second characteristic of quality of service 64 having a corresponding further second value 65.

Said at least one further set second characteristic of quality of service 64 of the second packet data service 61 is, in the embodiment of Figs. 4 and 5, the maximum delay allowed upon data transmission PDB (Fig. 5).

In other embodiments, said at least one further set second characteristic of quality of service 64 of the second packet data service 61 can be the maximum limit allowed of packet data loss upon data transmission PELR or the priority level upon data transmission PRIO.

The further second value 65 of said at least one further set second characteristic of quality of service 64 of said at least one second packet data service 61 is different from the set second value 55 of said second characteristic of quality of service 52 of the first packet data service 51.
set second characteristic of quality of service 64 is 50 ms (Fig. 5).

With reference again to Fig. 4, the method 400 further comprises a step of defining 403 an aggregate of packet data services 500, herein below also aggregate of data service or simply aggregate, comprising the first packet data service 51 and said at least one second packet data service 61.

Such aggregate of packet data services will be described herein below.

Next, the method 400 comprises a step of associating 404 the aggregate of packet data services 500 with a transport tunnel (bearer) of packet data services. Examples of transport tunnels of packet data service (EPS bearers b1-b3, b1'-b3') have been defined above with particular reference to Fig. 2.

The method 400 further comprises a step of defining 405 an aggregated QCI identifier representative of the transport tunnel associated to the aggregate of packet data services 500.

As defined above, the aggregated QCI identifier is the proprietary QCI identifier defined by the Applicant, as allowed by the standard 3GPP, which defines only the so-called standard QCI identifiers.

A possible value of the aggregated QCI identifier for the aggregate of packet data services 500 is, for example, 174.

Referring back to the step of defining 403 an aggregate of packet data services 500, it is pointed out that the aggregate of packet data services 500 is defined by a first aggregated characteristic of quality of service 501 having a corresponding first aggregated value 502 and at least one second aggregated characteristic of quality of service 503 having a corresponding second aggregated value 504.

The first aggregated value 502 of the first aggregated characteristic of quality of service 501 of the aggregate of packet data services 500 is the first value 53 of the first characteristic of quality of service 52 of the first packet data service 51.
packet data services 500, between the second value 55 of said set second characteristic of quality of service 54 of the first packet data service 51 and the further second value 65 of said at least one further second characteristic of quality of service 64 of said at least one second packet data service 61, is advantageously the one that is suitable to ensure the use of both the first packet data service 51 and said at least one second packet data service 61 both when the first packet data service 51 and said at least one second packet data service 61 are transmitted within the aggregate of packet data services 500 and when the first packet data service 51 and said at least one second packet data service 61 are transmitted individually within a corresponding transport tunnel having a corresponding identifier QCI of the standard type.

In other terms, the selection between the second value 55 of said set second characteristic of quality of service 54 of the first data service 51 and the further second value 65 of said at least one further second characteristic of quality of service 64 of said at least one second packet data service 61 is aimed to select the one that is suitable to ensure, on one hand, the use of both the first packet data service 51 and of said at least one second packet data service 61 when the first packet data service 51 and said at least one second packet data service 61 are transmitted within the aggregate of packet data services 500 and, on the other hand, without penalizing, maintaining the characteristics, the single packet data services, as the first packet data service 51 and said at least one second packet data service 61, when transmitted individually, as defined by the standard, i.e., each within a corresponding transport tunnel (bearer) having a corresponding identifier QCI of the standard type, i.e., defined in the specification 3GPP TS 23.203.

Such selection depends of course on the type of aggregated packet data services and of the compared characteristic of quality of service in order to operate the selection.
services to be aggregated. For example, if the compared technical characteristic is the type of data transmission band, packet data services that are all in guaranteed band GBR or all in non-guaranteed band Non-GBR are mutually aggregated.

In other cases, the selection may fall on the lowest value of the compared technical characteristic on the packet data services to be aggregated. For example, if the compared technical characteristic is the maximum delay allowed upon data transmission, then the selection falls on the lowest value.

In still other cases, the selection may fall on the highest value of the compared technical characteristic on the packet data services to be aggregated. For example, if the compared technical characteristic is the maximum delay allowed upon data transmission PDB, the maximum limit allowed of packet data loss upon data transmission PELR, or the priority level upon data transmission PRIO (the importance level), then the selection may fall on the lowest value, except for some cases.

In fact, in still other cases, the selection may fall on the lowest value of the compared technical characteristic on the packet data services to be aggregated, in the case that the latter is the priority level upon data transmission PRIO. In fact, in the case that a penalization of an aggregate of packet data services (or single packet data services with standard QCI) with a higher importance (for example relating to packet data services of the voice type) is not desired, a possible and further aggregate of packet data services could be defined with an aggregated characteristic of quality of data service, such as the priority level upon data transmission, having a value corresponding to the highest or any other value different from the lowest among the values of compared technical characteristics.

This allows respecting a determined hierarchic order among aggregates of packet data services and single packet data services with standard QCI identifier, such as not to penalize the most important packet reference to a further aggregate of packet data services, indicated with the numeral reference 600, obtainable with the method 400 in accordance with the embodiment of Figs. 4 and 5.

Referring back to Fig. 5, the first aggregated characteristic of quality of service 501 is the type of band available upon data transmission (GBR, Non-GBR); the corresponding first aggregated value 502 of the first aggregated characteristic of quality of service 501 is, for example, available guaranteed data transmission band (GBR); said at least one second aggregated characteristic of quality of service 503 is the maximum delay allowed upon data transmission PDB and the corresponding second aggregated value 504 of said at least one second aggregated characteristic of quality of service 503 is 50 ms.

It shall be noticed that, in this embodiment, the selection in order to determine said at least one second aggregated characteristic of quality of service 503 (maximum delay allowed upon data transmission PDB) has fallen on the lowest among the compared values.

The method 400 comprises a symbolic step ending ED.

In accordance with an embodiment of the method 400, the first packet data service 51 is defined by at least one third characteristic of quality of service 56 having a corresponding third value 57.

With reference to Fig. 5, the third characteristic of quality of service 56 is, in an embodiment, the maximum limit allowed of packet data loss upon data transmission PELR.

In accordance with a further embodiment, the third characteristic of quality of service 56 can be the priority level upon data transmission PRIO.

The corresponding third value 57 of the third characteristic of quality of service 56 of the first packet data service, in the case that such third characteristic is the maximum limit allowed of packet data loss upon data transmission PELR, is, for example, 10⁻².

In accordance again with this embodiment, said at least one second

With reference to Fig. 5, the at least one further third characteristic of quality of service 66 is the maximum limit allowed of packet data loss upon data transmission PELR; the corresponding third value 67 of said at least one third characteristic of quality of service 505 is 10⁻³ ms.

The aggregate of packet data services 500 is further defined by a third aggregated characteristic of quality of service 505 having a corresponding third aggregated value 506.

The third aggregated value 506 of said at least one third aggregated characteristic of quality of service 505 of the aggregate of packet data services 500, between the third value 57 of said determined second characteristic of quality of service 56 of the first packet data service 51 and the further third value 67 of said at least one further third characteristic of quality of service 66 of said at least one second packet data service 61, is advantageously the one that is suitable to ensure the use of both the first packet data service 51 and of said at least one second packet data service 61 both when the first packet data service 51 and said at least one second packet data service 61 are transmitted within the aggregate of packet data services 500 and when the first packet data service 51 and said at least one second packet data service 61 are transmitted individually within a corresponding transport tunnel (bearer) having a corresponding identifier QCI of the standard type.

In other terms, also in this embodiment, the selection in the step of defining the aggregate of packet data services 500 is aimed to select the value suitable to ensure, on one hand, the use of both the first packet data service 51 and of said at least one second packet data service 61 when the first packet data service 51 and said at least one second packet data service 61 are transmitted within the aggregate of packet data services 500 and, on the other hand, without penalizing, preserving the characteristics thereof, the single packet data services, as the first packet data service 51 and said at least one second packet data service 61, when transmitted standard type, i.e., defined in the specification 3GPP TS 23.203.

With reference to Fig. 5, the third aggregated characteristic of quality of service 505 is the maximum limit allowed of packet data loss upon data transmission PELR; the corresponding third aggregated value 506 of the third aggregated characteristic of quality of service 505 is 10⁻³.

It shall be noticed that, in this embodiment, the selection in order to determine said at least one third aggregated characteristic of quality of service 505 (maximum limit allowed of packet data loss upon data transmission PELR) has fallen on the lowest among the compared values.

The method 400 ends with a step of ending ED.

In accordance with another embodiment, the first packet data service 51 is defined by at least one fourth characteristic of quality of service 58 having a corresponding fourth value 59.

With reference to Fig. 5, said at least one fourth characteristic of quality of service 58 of the first packet data service 51 is the priority level upon data transmission PRIO. The corresponding fourth value 59 of said at least one fourth characteristic of quality of service 58 of the first packet data service 51 is the scalar value 2.

It shall be noticed that, in accordance with the specification 3GPP TS 23.203, the scalar value representative of the priority level upon data transmission PRIO is inversely proportional to the priority level upon data transmission PRIO of the packet data service to which that scalar value is assigned.

In other terms, with reference to the figure, the packet data service to which a scalar value 9 is associated of priority level upon data transmission PRIO is the packet data service with the lowest priority, while the packet data service to which a scalar value 1 is associated of priority level upon data transmission PRIO is the packet data service with the highest priority.

Referring back to the embodiment, said at least one second packet

With reference to the embodiment of Fig. 5, said at least one further fourth characteristic of quality of service 68 is, in this embodiment, the priority level upon data transmission PRIO.

The corresponding further fourth value 69 of said at least one further fourth characteristic of quality of service 68 of the second packet data service 61 is the scalar value 3.

The aggregate of packet data services 500 is defined by a fourth aggregated characteristic of quality of service 507 having a corresponding fourth aggregated value 508.

The fourth aggregated value 508 of said at least one fourth aggregated characteristic of quality of service 507 of the aggregate of packet data services 500, between the fourth value 59 of the fourth characteristic of quality of service 58 of the first packet data service 51 and the further fourth value 69 of the further fourth characteristic of quality of service 68 of said at least one second packet data service 61, is advantageously the one that is suitable to ensure the use of both the first packet data service 51 and of said at least one second packet data service 61 both when the first packet data service 51 and said at least one second packet data service 61 are transmitted within the aggregate of packet data services 500 and when the first data service 51 and said at least one second data service 61 are transmitted individually within a corresponding transport tunnel (bearer) having a corresponding QCI identifier of the standard type.

In other terms, also in this embodiment, the selection in the step of defining the aggregate of packet data services 500 is aimed to select the value suitable to ensure, on one hand, the use of both the first packet data service 51 and of said at least one second packet data service 61 when the first packet data service 51 and said at least one second packet data service 61 are transmitted within the aggregate of packet data services 500 and, on the other hand, without penalizing, preserving the characteristics individually, as defined by the standard, i.e., each within a corresponding transport tunnel (bearer) having a corresponding QCI identifier of the standard type, i.e., defined in the specification 3GPP TS 23.203.

With reference still to Fig. 5, the fourth aggregated characteristic of quality of service 507 is the priority level upon data transmission PRIO; the corresponding fourth aggregated value 508 of the fourth aggregated characteristic of quality of service 507 is 2.

It shall be noticed that, in this embodiment, the selection in order to determine said at least one fourth aggregated characteristic of quality of service 507 (priority level upon data transmission PRIO) has fallen on the lowest among the compared values.

In accordance with a further embodiment, illustrated also in Fig. 4 with hatched lines, the method 400 further comprises a step of identifying 406 of at least one third packet data service 71 defined by a further first characteristic of quality of service 72 having a corresponding further first value 73, said further first value 73 being equal to the determined first value 53 of the first characteristic of quality of service 52 of the first packet data service 51.

With reference to Fig. 5, said at least one third packet data service 71 is a Live Streaming video service.

The further first characteristic of quality of service 72 of said at least one third packet data service 71 is the type of band available upon data transmission.

The further first value 73 of the further first characteristic of quality of service 72 of said at least one third packet data service 71 is available guaranteed data transmission band GBR.

The at least one third packet data service 71 is defined by at least one further second characteristic of quality of service 74 having a corresponding further second value 75, the further second value 75 of said at least one further second characteristic of quality of service 74 of said at first packet data service 51 and the further second value 65 of said at least one further second characteristic of quality of service 64 of said at least one second packet data service 61.

It shall be noticed that also the at least one third packet data service 71 is defined by at least one further third characteristic of quality of service 76 and by at least one further fourth characteristic of quality of service 78 (Fig. 5). Examples of such characteristics of quality of service will be described herein below.

With reference to Fig. 5, if the maximum delay allowed upon data transmission PDB is considered as said at least one further second characteristic of quality of service 74 of the third packet data service 71, its corresponding second value 75 is 150 ms, different from both the corresponding second value 55 of the second characteristic of quality of service 54 of the first packet data service 51, i.e., 100 ms, and the corresponding second value 65 of the second characteristic of quality of service 64 of the second packet data service 61, i.e., 50 ms.

The method 400 further comprises a step of associating 407, to the aggregate of packet data services 500 of the first packet data service 51 and of said at least one second packet data service 61, said at least one third packet data service 71.

The first aggregated value 502 of said first characteristic of quality of service 501 of the aggregate of packet data services 500 is the first value 53 of the first characteristic of quality of service 52 of the first packet data service 51 (i.e., GBR).

The second aggregated value 504 of said at least one second aggregated characteristic 503, between the second value 55 of the second characteristic of quality of service 54 of the first packet data service 51 (i.e., 100 ms), the further second value 65 of the further second characteristic of quality of service 64 of said at least one second packet data service 61 (i.e., 50 ms) and the further second value 75 of the further second characteristic data service 51, of said at least one second packet data service 61 and of said at least one third packet data service 71, both when the first packet data service 51, said at least one second packet data service 61 and said at least one third packet data service 71 are transmitted within the aggregate of packet data services 500, and when the first packet data service 51, said at least one second packet data service 61 and said at least one third packet data service 71 are transmitted individually within a corresponding transport tunnel (bearer) having a corresponding QCI identifier of the standard type.

In other terms, the selection in the step of defining the aggregate of packet data services 500 is aimed to select the value suitable to ensure, on one hand, the use of the first packet data service 51, of said at least one second packet data service 61 and of said at least one third packet data service 71 when the first packet data service 51, said at least one second packet data service 61 and said at least one third packet data service 71 are transmitted within the aggregate of packet data services 500 and, on the other hand, without penalizing, preserving the characteristics thereof, the single packet data services, as the first packet data service 51, said at least one second packet data service 61 and said at least one third packet data service 71 when transmitted individually, as defined by the standard, i.e., each within a corresponding transport tunnel (bearer) having a corresponding QCI identifier of the standard type, i.e., defined in the specification 3GPP TS 23.203.

In an embodiment, the first characteristic of quality of service 52 of the first packet data service 51, the further first characteristic of quality of service 62 of said at least one second packet data service 61 and the further first characteristic of quality of service 72 of said at least one third packet data service 71 are the type of band available upon data transmission.

In the embodiment of Fig. 5, such type of band available upon data guaranteed (GBR).

The selection of the first aggregated value 502 of said first characteristic of quality of service 501 of the aggregate of packet data services 500 has therefore fallen on a type of available guaranteed data transmission band (GBR).

Furthermore, in this embodiment, it is reaffirmed that the second characteristic of quality of service 54 of the first packet data service 51, the further second characteristic of quality of service 64 of said at least one second data service 61 and the further second characteristic of quality of service 74 of said at least one third packet data service 71 are the maximum delay allowed upon data transmission PDB for the data service to which it is assigned.

It shall be noticed that, in this embodiment, the selection of the second aggregated value 504 of said at least one second aggregated characteristic of quality of service 503 (maximum delay allowed upon data transmission PDB) has fallen on the lowest among the compared values (50ms).

In addition, again in the same embodiment, it is reaffirmed that the third characteristic of quality of service 56 of the first data service 51, the further third characteristic of quality of service 66 of said at least one second data service 61 and the further third characteristic of quality of service 76 of said at least one third data service 71 are the maximum limit allowed of packet data loss upon data transmission PELR allowed for the data service to which it is assigned.

It shall be noticed that in this embodiment, the selection of the third aggregated value 506 of said at least one third aggregated characteristic of quality of service 505 (maximum limit allowed of packet data loss upon data transmission PELR), carried out according to the same criterion indicated for the selection of the second aggregated value 504 of said at least one second aggregated characteristic of quality of service 503 (not repeated

Still, again in the same embodiment, the fourth characteristic of quality of service 58 of the first data service 51, the further fourth characteristic of quality of service 68 of said at least one second data service 61 and the further fourth characteristic of quality of service 78 of said at least one third packet data service 71 are the priority level upon data transmission PRIO of the data service to which it is assigned.

It shall be noticed that, in this embodiment, the selection of the fourth aggregated value 508 of said at least one fourth aggregated characteristic of quality of service 507 (priority level upon data transmission PRIO), carried out according to the same criterion indicated for the selection of the second aggregated value 504 of said at least one second aggregated characteristic of quality of service 503 (not repeated herein by the sake of brevity), has fallen on the lowest among the compared values (2).

It is pointed out that the embodiment of Fig. 5, besides the aggregate of packet data services 500, illustrates other aggregates of packet data services, obtainable with the management method 400 described above.

In more detail, in Fig. 5, it is noticed that, in accordance with the management method 400 of the present invention, it has been possible to aggregate, besides the first three packet data services, corresponding to the standard QCI identifiers of value 1, 2 and 3, respectively, (aggregate of packet data services 500), the further packet data services corresponding, respectively, to the standard QCI identifiers 6, 8 and 9 in a further aggregate of packet data services indicated with the numeral reference 600.

Therefore, all the steps of the method 400 indicated above to obtain the aggregate of packet data services 500 can be repeated also for the definition of the further aggregate of packet data services 600.

With reference to Fig. 5, in the aggregate of packet data services 600, the first packet data service can be considered as the one with the assigned standard QCI identifier of value 6; said at least one second packet considered as the one with the assigned QCI identifier of value 9.

Each of these services of the type packet data are defined by a first characteristic of quality of service (for example, the type of band available upon data transmission), a second characteristic of quality of service (for example, the maximum delay allowed upon data transmission PDB), a third characteristic of quality of service (for example, the maximum limit allowed of packet data loss upon data transmission PELR), a fourth characteristic of quality of service (for example, the priority level upon data transmission PRIO).

In accordance with the embodiment of Fig. 5, such packet data services are of the Video/TCP based type and have in common the same value of type of band available upon data transmission (non-guaranteed, Non-GBR), the same maximum delay allowed upon data transmission PDB (300ms), the same maximum limit allowed of packet data loss upon data transmission PELR (10⁻⁶).

Therefore, by applying the same selection criterion already defined above, the further aggregate of packet data services 600 is defined by: a first aggregated characteristic of quality of service 601 having a first aggregated value 602, corresponding to the type of non-guaranteed band available upon data transmission Non-GBR; a second aggregated characteristic of quality of service 603 having a second aggregated value 604, corresponding to PDB = 300ms; a third aggregated characteristic of quality of service 605 having a third aggregated value 606, corresponding to PELR = 10⁻⁶.

The further aggregate of packet data services 600 is further defined by a fourth aggregated characteristic of quality of service 607 having a fourth aggregated value 608, corresponding to PRIO = 9.

It shall be noticed that, in this embodiment, the selection of the fourth aggregated value 608 of said at least one fourth aggregated characteristic of quality of service 607 (maximum limit allowed of packet 500 (not repeated herein by the sake of brevity), has fallen on the highest among the compared values (9).

Such selection allows advantageously assigning to the further aggregate of packet data services 600 a priority level such as to allow, on one hand, the use of the above-mentioned packet data services both when transmitted in the further aggregate of packet data services 600 and, on the other hand, without penalizing the same data services when transmitted individually with an assigned QCI identifier of the standard type or another aggregate of packet data services (for example, the aggregate of packet data services 500), with an assigned aggregated QCI identifier, having a aggregated characteristic of quality of service of a lower value, in the case of the priority level upon data transmission PRIO, compared to the corresponding aggregated characteristic (for example the fourth one, as indicated above) of the further aggregate of packet data services 600.

In other terms, such selection allows not penalizing packet data services not being part of the further aggregate of packet data services 600 to which ensure a scheduling priority is desired to be ensured, favoring the performance characteristics thereof, that is anyhow higher than the one of the further aggregate of packet data services 600.

It shall be noticed that what has been indicated for the further aggregate of packet data services 600 can be applied also in the definition of the aggregate of packet data services 500.

Referring back to the embodiment of Fig. 5, it shall be noticed that, on the contrary, it has been preferred to not aggregated two or more of the data services corresponding, respectively, to the standard QCI identifiers of value 4, 5 and 7 that, therefore, remain represented and defined individually.

This is due to the fact that the aggregation in accordance with the management method 400 would have imposed to some packet data services characteristics of quality of service that would not have allowed

In this regard, an aggregated QCI identifier is defined also for the further aggregate of packet data services 600, as for the aggregate of packet data services 500. The other data services, which are not aggregated with any other data service, will maintain the standard QCI identifier.

A possible value of the aggregated QCI identifier for the further aggregate of packet data services 600 is, for example, 136.

The possible value of the aggregated QCI identifier for the aggregate of packet data services 500 is, instead, as defined above, for example, 174.

Therefore, by the management method 400 of the present invention, it was possible to decrease the number of data service transport tunnels (bearers) (in the described example, from 9 to 5).

It shall be noticed that in the last row of the table illustrated in Fig. 5, the five ones among the aggregates of packet data services (EPS bearers)/single EPS bearers (not aggregated) are indicated, defined with the management method 400 of the present invention, each indicated with the corresponding characteristics of quality of service.

With reference also generally to the method for managing transport tunnels of data service, it shall be noticed that, as illustrated in the figures 1 and 2, when a quality of service level is defined (aggregate of packet data services with aggregated QCI identifiers), such definition applies within the LTE-technology network architecture, i.e., on the uplink communication channel UPL between said at least one user equipment UE 1 and said packet data traffic management network EPC 4 and on the downlink communication channel DWL from said packet data traffic management network EPC 4 and said at least one user equipment UE 1.

However, the improvements of the management of the data traffic made at the level of quality of service for the aggregated transportation as described above, do not have any impact upon forwarding the packet data occurs in the best-effort mode for all the requests of all users, independently from the defined and/or assigned quality of service.

In order to obviate this drawback, the Applicant proposed, in addition to the aggregation of the transport tunnels (bearers), as described above, so as to decrease the number thereof, the mapping of each aggregate of packet data services with a numeral value representative of the priority level of such aggregate of packet data services at the level of the transportation network IP.

Therefore, a mapping (i.e., routing) rule was defined between the quality of the service QoS defined at the LTE level (aggregated QCI identifiers and standard, i.e., not aggregated QCI identifiers,) and a quality of service at the level of the transportation network IP.

For the definition of such mapping rule, reference can be made to the so-called architecture of *Differentiated Services,* usually used for the network architectures at the IP level on a large scale, as defined in the publication IETF RFC 4594 (*Internet Engineering Task Force Request For Comments 4594*).

This type of architecture allows the association or mapping (so-called coloration) of a IP data packet with a predetermined scalar numeral value (color) as a function of which a corresponding service class is identified.

By service class is meant a type of packet data services that, in terms of quality of service, at the level of IP transportation network, need to undergo to the same processing.

For example, packets that are mapped (or colored) in the same manner refer to a same type of packet data service (for example, voice) and, during the transportation on the IP level transportation network, each network node, based on the numerical value (coloration) associated to the packet, is capable of defining the IP-level priority to be associated to such data packet.
apparatuses of the IP transportation network, which entities are used for the routing of the data packets, i.e., the apparatuses of the so-called transportation clouds based on the IP (IP-based) transportation, not shown in the figures.

The mapping or coloration (to be inserted in the "traffic service" field of the heading of the packet IP) defines a differentiation at the service level, which allows managing the priority routing of the data traffic also in the case of a network congestion.

In fact, the only scheduling priorities defined on the LTE technology network architecture, without the addition of the mapping or coloration defined above at the IP level, would not be of help in the case of network congestion problems. In this regard, if such a transportation mechanism (mapping or coloration at the IP level) would not be able to be added, the IP transportation network would be dimensioned with a so high capacity to ensure the maximum available band required by all the service types.

Therefore, in an embodiment, the method for managing transport tunnels according to the invention, comprises both the aggregation of packet data services within the transport tunnel (QCI identifier) and the embedding of such transport tunnel (routing, mapping or coloration at the IP level) in a IP packet that can be routed, by the network nodes of the IP transportation network, as a function of a IP-level priority decided based on a service class.

Based on what has been stated above, referring now to Fig. 4, in accordance with an embodiment (shown in hatched lines), the method 400 further comprises a step of associating 408 to each data service a corresponding numeral value DSCP (Differentiated Services Code Point) representative of the priority level of such data service upon data transmission at the IP transportation network level.

It shall be noticed that in the embodiment of Fig. 5, a corresponding numeral value DSCP D1, for example EF, is associated to the first packet corresponding numeral value D3, for example CS4, is associated to said at least one third packet data service 71

The method 400 then ends with a step of ending E.

Furthermore, in accordance with a further embodiment, illustrated in hatched lines in Fig. 4, in the case that the first packet data service 51, with an associated corresponding first numeral value DSCP D1 representative of the IP-level priority level of such first packet data service 51 upon data transmission at the IP transportation network level, and said at least one second data service 61, with an associated second numeral value DSCP D3 representative of the IP-level priority level of said at least one second data service 61 upon data transmission at the IP transportation network level, are aggregated in the aggregate of packet data services 500, the method 400 comprises a step of associating 409 to the aggregate of packet data services 500 a corresponding aggregated numeral value DSCP DA1 representative of the IP-level priority level of such aggregate of packet data services upon data transmission at the IP transportation network level, selected between said first numeral value DSCP D1 representative of the IP-level priority level of such first data service 51 upon data transmission at the IP transportation network level and said second numeral value DSCP D2 representative of the IP-level priority level of said at least one second data service 61 upon data transmission at the IP transportation network level.

The selection is based on the fact that to each of the packet data services, thus with an aggregated (proprietary) QCI identifier, a numeral value DSCP is associated, which is suitable to ensure the best data transmission performance within the aggregate of packet data services 500, therefore also to the packet data service which, among those aggregated within the aggregate of packet data services 500, need a higher performance.

With reference to the table of Fig. 5, the first two row correspond to value DSCP (color) to each data service set forth in the table; the first row sets forth instead the association of an aggregated numeral value DSCP (color) to each aggregate of determined packet data services.

As it shall be noticed, the aggregate of packet data services 500 has a mapping DSCP = EF (indicated in the first row), corresponding to the mapping of the first packet data service 51, i.e., the voice service (indicated in the second row).

The further aggregate of packet data services 600 has a mapping DSCP = CS1 (indicated in the first row), corresponding to the mapping of the service relating to TCP-protocol-based applications that does not require band guarantees, CS1.

The decision to use the mapping value CS1 with priority level upon data transmission PRIO that is typically processed with a standard data transmission processing is to limit the effect of loss of packets at the IP level which are a part of the further aggregate of packet data services 600, relating to TCP-protocol-based applications.

The method 400 ends, also in this case, with a symbolic step of ending E.

In accordance with a further embodiment of the management method of the present invention, the Applicant considered a further parameter of quality of service, referred to as ARP (*Allocation Retention Priority*).

The parameter is the result of a further aggregation mechanism used on LTE technology architectures.

In more detail, it shall be noticed that during the data traffic management, thus also of the data traffic transport tunnels, different parameters of quality of service (QoS) are exchanged, for example QoS parameters depending on the user profile (for the default transport tunnel) or next QoS parameters depending on the service types that the user is requiring to the service network PDN. Such parameters correspond to the

The parameter ARP comprises a numeral value (scalar value) of allocation priority level ARP, associated to a request of transport tunnel (bearer) to be able to allow applying management mechanisms of the data traffic network congestion.

In case of a service request, the network is informed of the need of having a transport tunnel (bearer) with a specific QCI identifier (this can be one of the nine standard QCI identifiers or one of the aggregated - proprietary QCI identifiers defined for the aggregates of data services).

In response to the request, a transport tunnel (bearer) with determined characteristics is obtained. However, there is no guarantee to be able to obtain in response always the same resources. In fact, if a fault or a congestion problem occurs in the network, the new incoming requests are not accepted (there is even the risk that some already assigned services are terminated).

For the management also of these terminations, the data traffic management mechanism based on the parameter ARP is used.

If a service request is made by a user at a priority level ARP that is higher than other users, in lack radio resources, the scheduler of an eNodeB serves first the request with a higher priority level ARP.

It shall be noticed that the priority level ARP is based on the user profile type or it can be based on the service type. In the second case, the level of the parameter ARP that is used is different while the service is the same.

Instead, for different services, also the same priority level ARP can be present, however, in this moment, all would be managed in concurrence, by the scheduler of an eNodeB, with the priority of the QCI, therefore the resource management would be implemented on a still different level.

Also with the same service type, the fact of defining a parameter ARP with a higher priority ensures preempting the data service transport tunnel (bearer) with a lower parameter ARP and passing the transport

As described in the technical specification 3GPP TS 23.203, to the priority level ARP parameter (numeral value 1 to 15) other two Boolean values (YES, NO) are associated: a second value representative of the pre-emption capability in the case of a conflict; a third value representative of the pre-emption vulnerability in the case of a conflict.

For example, an operator of the commercial network (in the case he/she wants to reach a network apparatus for maintenance operations) may enter with a request with a high priority level ARP parameter, defining the second value and the third value so as to pre-empt all the other ones, while not being subjected to a pre-emption.

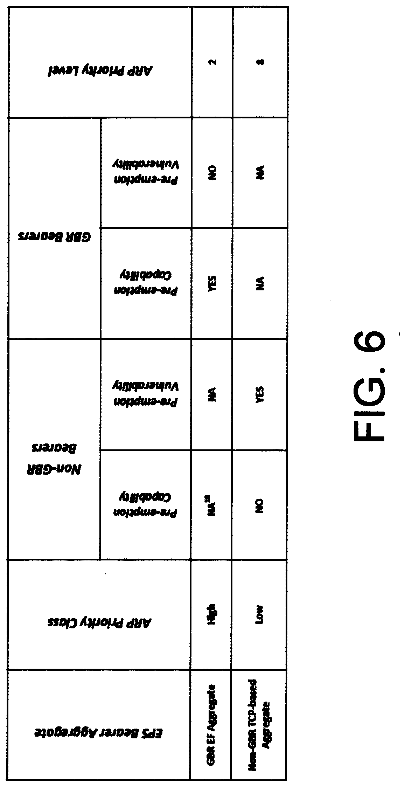

In Fig. 6 is illustrated a table that shows the priority level ARP parameter (numerical value), the second Boolean value and the third Boolean value defined for the aggregate of packet data services 500 and the further aggregate of packet data services 600 illustrated in Fig. 5.

Referring back to Fig. 4, the method 400 comprises, in accordance with a further embodiment (shown in the figures in hatched lines), a step of associating 410 to said at least one aggregate of packet data services 500 (or said further aggregate of packet data services 600) a corresponding value of allocation priority level ARP of such aggregate of packet data services 500 (or said further aggregate of packet data services 600) at the radio level.

In addition, the method 400 comprises a step of associating 411 to said at least one aggregate of packet data services 500 (or said further aggregate of packet data services 600), with the associated value of allocation priority level ARP of such aggregate of packet data services 500 (or said further aggregate of packet data services 600) at the radio level, a second Boolean value representative of the pre-emption capability of such aggregate of packet data services 500 (or said further aggregate of packet data services 600) with respect to a further aggregate of packet data services or a data service individually transmitted within a corresponding level (ARP) of such further aggregate of packet data services or of the data service individually transmitted within a corresponding transport tunnel (bearer) having a corresponding QCI identifier of the standard type upon data transmission at the radio level, lower than the value of allocation priority level ARP associated to such at least one aggregate of packet data services 500 (or said further aggregate of packet data services 600) at the radio level.

In addition, the method 400 comprises a step of associating 412 to said at least one aggregate of packet data services 500 (or said further aggregate of packet data services 600), with the associated value of allocation priority level ARP of such aggregate of packet data services 500 (or said further aggregate of packet data services 600) at the radio level, a third Boolean value representative of the pre-emption vulnerability of such aggregate of packet data services 500 (or said further aggregate of packet data services 600) during the transmission in the case that a further aggregate of packet data services or a packet data service individually transmitted within a corresponding transport tunnel (bearer) having a corresponding QCI identifier of the standard type is present, with an associated corresponding value of allocation priority level ARP of such further aggregate of packet data services or a packet data service individually transmitted within a corresponding transport tunnel (bearer) having a corresponding QCI identifier of the standard type upon data transmission at the radio level that is higher than the priority level allocation value ARP associated to such at least one aggregate of packet data services 500 (or said further aggregate of packet data services 600) at the radio level.

The method 400 ends with a symbolic step of ending E.

As already indicated also above, it is pointed out that the method for managing transport tunnels of packet data services, in accordance with any embodiment, can be applied to the functional entities of the LTE technology hardware and/or in software.

As it can be noticed, the proposed method for managing data transport tunnels (bearers) has several advantages.

In fact, by defining a management method that aggregates, where possible, one or more different data services in a transport tunnel (bearer) (GTP-U, Evolved Packet System (EPS) Bearer), it is possible to obtain a decrease of the number of transport tunnels required for the data traffic transportation (*user plane*), thus improving the overall performance of the LTE-technology telecommunications network, in particular, the packet data traffic management network EPC (*Evolved Packet Core*).

Furthermore, in addition to a performance improvement, it is possible to define a convergent processing of the quality of service between the LTE protocol and the IP-level network transportation by means of the Differentiated Services architecture.

With the proposed method for managing data transport tunnels, it is possible to improve the performance of the data traffic management network EPC without necessarily making modifications to the standard, i.e., proposing an aggregation model of the data services that has characteristics of quality of service (QoS) homogeneous and applicable not only to the LTE architecture, but also to the IP-level transportation network (IP-based network).

Based on the technical specification 3GPP TS 23.203, the proposed method allows maintaining the interoperability with the standardized products of other LTE operators.

Furthermore, it is reaffirmed that the method of the invention allows reducing the number of transport tunnels (bearers) GTP-U by decreasing the times of data traffic management by the EPC network, thus improving the overall performance of the network architecture.

Still, the treatment of the quality of service by aggregating multiple packet data services in one transport tunnel (bearer) EPS, based on a operators compliant with the standard.

The mapping between the aggregated (proprietary) QCI identifier or the standard (non-aggregated) QCI identifier that identifies the quality of service QoS at the transport tunnel (EPS bearer) level and the corresponding IP-level service class, by assigning a numeral value (coloration) of DSCP in the corresponding field of the header of the IP packet transporting the user data plus the tunnel GTP-U header, advantageously allows obtaining a priority level defined also in the routing between the IP-level transportation network nodes.

The definition and use of the parameter ARP associated to the aggregates of packet data services allows managing at the best network congestion conditions.

The above-mentioned performance advantages are more apparent in the case of networks that are congested by a high number of users requiring multiple services that are mutually heterogeneous.

Finally, it shall be noticed that the proposed method may find a use in commercial products in which it is possible to require a quality of service QCI identifier for which the values of the QoS parameters defined in the proposal can be configured (to date, the technical specifications 3GPP provides for such possibility, which is however left vendor-dependent).

## Claims

1. Method (400) for managing transport tunnels (b1-b3, b1'-b3') of packet data services usable by a user in a LTE technology telecommunications network (100), each packet data service being defined by set characteristics of quality of service having set values, the method (400) comprising steps of:
- identifying (401) a first packet data service (51) defined by a set first characteristic of quality of service (52) having a set first value (53), said first data service (51) being defined by at least one set second characteristic of quality of service (54) having a corresponding second value (55);
- identifying (402) at least one second packet data service (61) defined by a set further first characteristic of quality of service (62) having a corresponding further first value (63), said further first value (63) being equal to the set first value (53) of the first characteristic of quality of service (52) of the first packet data service (51), said at least one second packet data service (61) being defined by at least one further second characteristic of quality of service (64) having a corresponding further second value (65), said further second value (65) of said at least one further characteristic second quality of service (64) of said at least one second packet data service (61) being different from the set second value (55) of said second characteristic of quality of service (54) of the first packet data service (51);
- defining (403) an aggregate of packet data services (500; 600) comprising the first packet data service (51) and said at least one second packet data service (61);
- associating (404) the aggregate of packet data services (500; 600) to a data service transport tunnel (b1 -b3, b1'-b3') the method being **characterized by**:
- defining (405) an aggregated QCI identifier representative of the data service transport tunnel (b1-b3, b1'-b3') associated to said aggregate of packet data services (500; 600);
said aggregate of packet data services (500; 600) being defined by a first aggregated characteristic of quality of service (501; 601) having a corresponding first aggregated value (502; 602) and at least one second aggregated characteristic of quality of service (503; 603) having a corresponding second aggregated value (504; 604), said first aggregated value (502; 602) of the first aggregated characteristic of quality of service (502; 602) of the aggregate of packet data services (500; 600) being the first value (53) of the first characteristic of the quality of service (52) of the first data service (51), said second aggregated value (504; 604) of said at least one second aggregated characteristic of quality of service (503; 603) of the aggregate of packet data services (500; 600) being the one, between the second value (55) of the second characteristic of quality of service (54) of the first data service (51) and the further second value (65) of the further second characteristic of quality of service (64) of said at least one second data service (61), suitable to ensure the use of both the first packet data service (51) and of said at least one second packet data service (61) both when the first packet data service (51) and said at least one second packet data service (61) are transmitted within the aggregate of packet data services (500; 600) and when the first packet data service (51) and said at least one second packet data service (61) are transmitted individually within a corresponding transport tunnel having a corresponding QCI identifier of the standard type,
- associating (408) to each packet data service (51, 61, 71) a corresponding numeral value DSCP (D1, D2, D3) representative of the priority level of such packet data service (51, 61, 71) upon data transmission at the IP transportation network level,
in the case that the first packet data service (51), with an associated corresponding first numeral value DSCP (D1) representative of the priority level of such first packet data service (51) upon data transmission at the IP transportation network level, and said at least one second packet data service (61), with an associated second numeral value DCSP (D2) representative of the priority level of said at least one second packet data service (61) upon data transmission at the IP transportation network level, are aggregated in the aggregate of packet data services (500; 600), the method (400) further comprising a step of associating (409) to the aggregate of packet data services (500; 600) a corresponding numeral value DSCP (DA1) representative of the priority level of such aggregate of packet data services (500; 600) upon data transmission at the IP transportation network level, selected between said first numeral value DSCP (D1) representative of the priority level of such first packet data service (51) upon data transmission at the IP transportation level and said second numeral value DSCP (D2) representative of the priority level of said at least one second packet data service (61) upon data transmission at the IP transportation network level.

2. The method (400) according to claim 1, wherein said first packet data service (51) is defined by at least one third characteristic of quality of service (56) having a corresponding third value (57), said at least one second packet data service (61) being defined by at least one further third characteristic of quality of service (66) having a corresponding further third value (67), the aggregate of packet data services (500; 600) being further defined by a third aggregated characteristic of quality of service (505; 605) of the aggregate of packet data services (500; 600) having a corresponding third aggregated value (506; 606), the third aggregated value (506; 606) of said at least one third aggregated characteristic of quality of service (505; 605) of the aggregate of packet data services (500; 600) being the one, between the third value (55) of the third characteristic of quality of service (56) of the first packet data service (51) and the further third value (67) of the further third characteristic of quality of service (66) of said at least one second packet data service (61), suitable to ensure the use of both the first packet data service (51) and of said at least one second packet data service (61) both when are transmitted within the aggregate of packet data services (500; 600) and when the first packet data service (51) and said at least one second packet data service (61) are transmitted individually within a corresponding transport tunnel having a corresponding QCI identifier of the standard type.

3. The method (400) according to claim 2, wherein said first packet data service (51) is defined by at least one fourth characteristic of quality of service (58) having a corresponding fourth value (59), said at least one second packet data service (61) being defined by at least one further fourth characteristic of quality of service (68) having a corresponding further fourth value (69), the aggregate of packet data services (500; 600) being defined by a fourth aggregated characteristic of quality of service (507; 607) having a corresponding fourth aggregated value (508; 608), the fourth aggregated value (508; 608) of said at least one fourth aggregated characteristic of quality of service (507; 607) of the aggregate of packet data services (500; 600) being the one, between the fourth value (59) of the fourth characteristic of quality of service (58) of the first packet data service (51) and the further fourth value (69) of the further fourth characteristic of quality of service (68) of said at least one second packet data service (61), suitable to ensure the use of both the first data service (51) and of said at least one second data service (61) both when the first data service (51) and said at least one second data service (61) are transmitted within the aggregate of packet data services (500; 600) and when the first data service (51) and said at least one second data service (61) are transmitted individually within a corresponding transport tunnel having a corresponding QCI identifier of the standard type.

4. The method (400) according to claim 3, further comprising the step:
- identifying (406) at least one third packet data service (71) defined by a further first characteristic of quality of service (72) having a corresponding further first value (73), said further first value (73) being equal to the determined first value (53) of the first characteristic of quality of service (52) of the first data service (51), said at least one third packet data service (71) being defined by at least one further second characteristic of quality of service (74) having a corresponding further second value (75), the further second value (75) of said at least one further second characteristic of quality of service (74) of said at least one third packet data service (71) being different from at least one of the second value (55) of said second characteristic of quality of service (54) of the first packet data service (51) and the further second value (65) of said at least one further second characteristic of quality of service (64) of said at least one second packet data service (61);
- associating (407), to the aggregate of packet data services (500; 600) of the first packet data service (51) and of said at least one second packet data service (61), said at least one third packet data service (71), the first aggregated value (502; 602) of said first characteristic of quality of service (501; 601) of the aggregate of packet data services (500; 600) being the first value (53) of the first characteristic of quality of service (54) of the first packet data service (51), the second aggregated value (504; 604) of said at least one second aggregated characteristic of quality of service (503; 603) being the one, between the second value (55) of the second characteristic of quality of service (54) of the first packet data service (51), the further second value (65) of the further second characteristic of quality of service (64) of said at least one second packet data service (61) and the further second value (75) of the further second characteristic of quality of service (74) of said at least one third packet data service (71), suitable to ensure the use of the first packet data service (51), of said at least one second packet data service (61) and of said at least one third data service (71), both when the first packet data service (51), said at least one second packet data service (61) and said at least one third packet data service (71) are transmitted within the aggregate of packet data services (500; 600) and when the first packet data service (51), said at least one second packet data service (61) and said at least one third packet data service (71) are transmitted individually within a corresponding transport tunnel having a corresponding QCI identifier of the standard type.

5. The method (400) according to claim 4, wherein the first characteristic of quality of service (52) of the first packet data service (51), the further first characteristic of quality of service (62) of said at least one second packet data service (61) and the further first characteristic of quality of service (72) of said at least one third packet data service (71) are a type of data transmission band (GBR, Non-GBR).

6. The method (400) according to claim 5, wherein the second characteristic of quality of service (54) of the first packet data service (51), the further second characteristic of quality of service (64) of said at least one second packet data service (61) and the further second characteristic of quality of service (74) of said at least one third packet data service (71) are the maximum delay allowed upon data transmission (PDB).

7. The method (400) according to claim 6, wherein said at least one third packet data service (71) is defined by a further third characteristic of quality of service (76) having a corresponding further third value (77), the third characteristic of quality of service (56) of the first packet data service (51), the further third characteristic of quality of service (66) of said at least one second packet data service (61) and the further third characteristic of quality of service (76) of said at least one third packet data service (71) being the maximum level allowed of data packet loss upon data transmission (PELR).

8. The method (400) according to claim 7, wherein said at least one third packet data service (71) is defined by a further fourth characteristic of quality of service (78) having a corresponding further fourth value (79), the fourth characteristic of quality of service (58) of the first packet data service (51), the further fourth characteristic of quality of service (68) of said at least one second packet data service (61) and the further fourth characteristic of quality of service (78) of said at least one third packet data service (71) being the priority level upon data transmission (PRIO).

9. The method (400) according to any of the preceding claims, comprising a step of associating (410) to said at least one aggregate of packet data services (500; 600) a corresponding value of allocation priority level (ARP) of such aggregate of packet data services (500; 600) at the radio level.

10. The method (400) according to claim 9, comprising a step of associating (411) to said at least one aggregate of packet data services (500; 600), with the associated corresponding value of allocation priority level (ARP) of such aggregate of packet data services (500; 600) at the radio level, a second Boolean value representative of the pre-emption capability of such aggregate of packet data services (500; 600) during the transmission data in the case that a further aggregate of packet data services (500; 600) is present or a data service individually transmitted within a corresponding transport tunnel having a corresponding QCI identifier of the standard type, with an associated corresponding value of allocation priority level (ARP) of such further aggregate of packet data services (500; 600) or of the data service individually transmitted within a corresponding transport tunnel having a corresponding QCI identifier of the standard type upon data transmission at the radio level, that is lower than the value of allocation priority level (ARP) associated to such at least one aggregate of packet data services (500; 600) at the radio level.

11. The method (400) according to claim 10, further comprising the step of associating (412) to said at least one aggregate of packet data services (500; 600), with the associated value of allocation priority level (ARP) of such aggregate of packet data services (500; 600) at the radio level, a third Boolean value representative of the pre-emption vulnerability of such aggregate of packet data services (500; 600) during the transmission data in the case that the further aggregate of packet data services (500; 600) is present, or a packet data service individually transmitted within a corresponding transport tunnel having a corresponding QCI identifier of the standard type, with an associated corresponding value of allocation priority level (ARP) of such further aggregate of packet data services (500; 600) or of the data service individually transmitted within a corresponding transport tunnel having a corresponding QCI identifier of the standard type upon data transmission at the radio level, that is higher than the value of allocation priority level (ARP) associated to such at least one aggregate of packet data services (500; 600) at the radio level.

12. A LTE technology network architecture (100), comprising:
- at least one user equipment UE (1);
- an E-UTRAN access network (2) comprising at least one first access network apparatus eNodeB (3, 3'), said user equipment UE (1) being configured to be operatively connected to said at least one first access network apparatus eNodeB (3, 3');
- a packet data traffic management network EPC (4) operatively connected to said E-UTRAN access network (2), said data traffic management network EPC (4) comprising:
- at least one first data traffic management gateway (7, 9);
- at least one packet data service network PDN (8) configured to provide packet data services on demand by a user, said packet data traffic management network EPC (4) being operatively interposed between the E-UTRAN access network (2) and the packet data service network PDN (8), said at least one first data traffic management gateway (7, 9) being operatively interposed between said at least one first access network apparatus eNodeB (3, 3') and said at least one network of data services PDN (8),
said at least one first data traffic management gateway (7, 9) being configured to the management of transport tunnels of packet data services in accordance with the management method (400) according to any of the preceding claims 1-11.

13. The network architecture (100) according to claim 12, wherein said packet data traffic management network (EPC) further comprises at least one second data traffic management gateway (9), said at least one second data traffic management gateway (9) being operatively interposed between said at least one first data traffic management gateway (7) and said at least one packet data service network PDN (8), said at least one second data traffic management gateway (9) being configured to the management of transport tunnels of packet data services in accordance with the management method (400) according to any of the preceding claims 1-11.

## Patentansprüche

1. Verfahren (400) zum Verwalten von Transporttunneln (b1-b3, b1'-b3') von Paketdatendiensten, die von einem Nutzer in einem LTE-Technologie-Telekommunikationsnetzwerk (100) genutzt werden können, wobei jeder Paketdatendienst durch festgelegte Dienstgütecharakteristika mit festgelegten Werten definiert ist, wobei das Verfahren (400) folgende Schritte aufweist:
Identifizieren (401) eines ersten Paketdatendienstes (51), der durch eine festgelegte erste Dienstgütecharakteristik (52) mit einem festgelegten ersten Wert (53) definiert ist, wobei der erste Datendienst (51) durch zumindest eine festgelegte zweite Dienstgütecharakteristik (54) mit einem entsprechenden zweiten Wert (55) definiert ist;
Identifizieren (402) zumindest eines zweiten Paketdatendienstes (61), der durch eine festgelegte weitere erste Dienstgütecharakteristik (62) mit einem entsprechenden weiteren ersten Wert (63) definiert ist, wobei der weitere erste Wert (63) gleich dem festgelegten ersten Wert (53) der ersten Dienstgütecharakteristik (52) des ersten Paketdatendienstes (51) ist, wobei der zumindest eine zweite Paketdatendienst (61) durch zumindest eine weitere zweite Dienstgütecharakteristik (64) mit einem entsprechenden weiteren zweiten Wert (65) definiert ist, wobei der weitere zweite Wert (65) der zumindest einen weiteren zweiten Dienstgütecharakteristik (64) des zumindest einen zweiten Paketdatendienstes (61) sich von dem festgelegten zweiten Wert (55) der zweiten Dienstgütecharakteristik (54) des ersten Paketdatendienstes (51) unterscheidet;
Definieren (403) eines Aggregats von Paketdatendiensten (500; 600), das den ersten Paketdatendienst (51) und den zumindest einen zweiten Paketdatendienst (61) aufweist;
Zuordnen (404) des Aggregats von Paketdatendiensten (500; 600) zu einem Datendiensttransporttunnel (b1-b3, b1'-b3'), wobei das Verfahren **gekennzeichnet ist durch**:
Definieren (405) eines aggregierten QCI-Identifizierers, der den Datendiensttransporttunnel (b1-b3, b1'-b3') darstellt, der dem Aggregat von Paketdatendiensten (500; 600) zugeordnet ist;
wobei das Aggregat von Paketdatendiensten (500; 600) **durch** eine erste aggregierte Dienstgütecharakteristik (501; 601) mit einem entsprechenden ersten aggregierten Wert (502; 602) und zumindest eine zweite aggregierte Dienstgütecharakteristik (503; 603) mit einem entsprechenden zweiten aggregierten Wert (504; 604) definiert ist, wobei der erste aggregierte Wert (502; 602) der ersten aggregierten Dienstgütecharakteristik (502; 602) des Aggregats von Paketdatendiensten (500; 600) der erste Wert (53) der ersten Dienstgütecharakteristik (52) des ersten Datendienstes (51) ist, wobei der zweite aggregierte Wert (504; 604) der zumindest einen zweiten aggregierten Dienstgütecharakteristik (503; 603) des Aggregats von Paketdatendiensten (500; 600) derjenige ist, zwischen dem zweiten Wert (55) der zweiten Dienstgütecharakteristik (54) des ersten Datendienstes (51) und dem weiteren zweiten Wert (65) der weiteren zweiten Dienstgütecharakteristik (64) des zumindest einen zweiten Datendienstes (61), der geeignet ist, um die Verwendung von sowohl dem ersten Datenpaketdienst (51) als auch dem zumindest einen zweiten Paketdatendienst (61) sicherzustellen, sowohl wenn der erste Paketdatendienst (51) und der zumindest eine zweite Paketdatendienst (61) innerhalb des Aggregats von Paketdatendiensten (500; 600) übertragen werden als auch wenn der erste Paketdatendienst (51) und der zumindest eine zweite Paketdatendienst (61) einzeln innerhalb eines entsprechenden Transporttunnels übertragen werden, der einen entsprechenden Standardtyp-QCI-Identifizierer aufweist,
Zuordnen (408), zu jedem Datenpaketdienst (51, 61, 71), eines entsprechenden Zahlenwerts DSCP (D1, D2, D3), der die Prioritätsebene eines solchen Datenpaketdienstes (51, 61, 71) auf eine Datenübertragung auf der IP-Transportnetzwerkebene hin darstellt,
falls der erste Paketdatendienst (51), mit einem zugeordneten entsprechenden ersten Zahlenwert DSCP (D1), der die Prioritätsebene eines solchen ersten Datenpaketdienstes (51) auf eine Datenübertragung auf der IP-Transportnetzwerkebene hin darstellt, und der zumindest eine zweite Paketdatendienst (61), mit einem zugeordneten zweiten Zahlenwert DCSP (D2), der die Prioritätsebene des zumindest einen zweiten Paketdatendienst (61) auf eine Datenübertragung auf der IP-Transportnetzwerkebene hin darstellt, in dem Aggregat von Paketdatendiensten (500; 600) aggregiert sind, das Verfahren (400) ferner einen Schritt des Zuordnens (409), zu dem Aggregat von Paketdatendiensten (500; 600), eines entsprechenden Zahlenwerts DSCP (DA1) aufweist, der die Prioritätsebene eines solchen Aggregats von Paketdatendiensten (500; 600) auf eine Datenübertragung auf der IP-Transportnetzwerkebene hin darstellt, ausgewählt zwischen dem ersten Zahlenwert DSCP (D1), der die Prioritätsebene eines solchen ersten Paketdatendienstes (51) auf eine Datenübertragung auf der IP-Transportebene hin darstellt, und dem zweiten Zahlenwert DSCP (D2), der die Prioritätsebene des zumindest einen zweiten Paketdatendienstes (61) auf eine Datenübertragung auf der IP-Transportnetzwerkebene hin darstellt.

2. Das Verfahren (400) gemäß Anspruch 1, bei dem der ersten Paketdatendienst (51) durch zumindest eine dritte Dienstgütecharakteristik (56) mit einem entsprechenden dritten Wert (57) definiert ist, wobei der zumindest eine zweite Paketdatendienst (61) durch zumindest eine weitere dritte Dienstgütecharakteristik (66) mit einem entsprechenden weiteren dritten Wert (67) definiert ist, wobei das Aggregat von Paketdatendiensten (500; 600) ferner durch eine dritte aggregierte Dienstgütecharakteristik (505; 605) des Aggregats von Paketdatendiensten (500; 600) mit einem entsprechenden dritten aggregierten Wert (506; 606) definiert ist, wobei der dritte aggregierte Wert (506; 606) der zumindest einen dritten aggregierten Dienstgütecharakteristik (505; 605) des Aggregats von Paketdatendiensten (500; 600) derjenige ist, zwischen dem dritten Wert (55) der dritten Dienstgütecharakteristik (56) des ersten Paketdatendienstes (51) und dem weiteren dritten Wert (67) der weiteren dritten Dienstgütecharakteristik (66) des zumindest einen zweiten Paketdatendienstes (61), der geeignet ist, um die Verwendung von sowohl dem ersten Paketdatendienst (51) als auch dem zumindest einen zweiten Paketdatendienst (61) sicherzustellen, sowohl wenn dieselben innerhalb des Aggregats von Paketdatendiensten (500; 600) übertragen werden als auch wenn der erste Paketdatendienst (51) und der zumindest eine zweite Paketdatendienst (61) einzeln innerhalb eines entsprechenden Transporttunnels übertragen werden, der einen entsprechenden Standardtyp-QCI-Identifizierer aufweist.

3. Das Verfahren (400) gemäß Anspruch 2, bei dem der erste Paketdatendienst (51) durch zumindest eine vierte Dienstgütecharakteristik (58) mit einem entsprechenden vierten Wert (59) definiert ist, wobei der zumindest eine zweite Paketdatendienst (61) durch zumindest eine weitere vierte Dienstgütecharakteristik (68) mit einem entsprechenden weiteren vierten Wert (69) definiert ist, wobei das Aggregat von Paketdatendiensten (500; 600) durch eine vierte aggregierte Dienstgütecharakteristik (507; 607) mit einem entsprechenden vierten aggregierten Wert (508; 608) definiert ist, wobei der vierte aggregierte Wert (508; 608) der zumindest einen vierten aggregierten Dienstgütecharakteristik (507; 607) des Aggregats von Paketdatendiensten (500; 600) derjenige ist, zwischen dem vierten Wert (59) der vierten Dienstgütecharakteristik (58) des ersten Paketdatendienstes (51) und dem weiteren vierten Wert (69) der weiteren vierten Dienstgütecharakteristik (68) des zumindest einen zweiten Paketdatendienstes (61), der geeignet ist, um die Verwendung von sowohl dem ersten Datendienst (51) als auch dem zumindest einen zweiten Datendienst (61) sicherzustellen, sowohl wenn der erste Datendienst (51) und der zumindest eine zweite Datendienst (61) innerhalb des Aggregats von Paketdatendiensten (500; 600) übertragen werden als auch wenn der erste Datendienst (51) und der zumindest eine zweite Datendienst (61) einzeln innerhalb eines entsprechenden Transporttunnels übertragen werden, der einen entsprechenden Standardtyp-QCI-Identifizierer aufweist.

4. Das Verfahren (400) gemäß Anspruch 3, das ferner folgenden Schritt aufweist:
Identifizieren (406) zumindest eines dritten Paketdatendienstes (71), der durch eine weitere erste Dienstgütecharakteristik (72) mit einem entsprechenden weiteren ersten Wert (73) definiert ist, wobei der weitere erste Wert (73) gleich dem bestimmten ersten Wert (53) der ersten Dienstgütecharakteristik (52) des ersten Datendienstes (51) ist, wobei der zumindest eine dritte Paketdatendienst (71) durch zumindest eine weitere zweite Dienstgütecharakteristik (74) mit einem entsprechenden weiteren zweiten Wert (75) definiert ist, wobei der weitere zweite Wert (75) der zumindest einen weiteren zweiten Dienstgütecharakteristik (74) des zumindest einen dritten Paketdatendienstes (71) sich von zumindest einem des zweiten Werts (55) der zweiten Dienstgütecharakteristik (54) des ersten Paketdatendienstes (51) und des weiteren zweiten Werts (65) der zumindest einen weiteren zweiten Dienstgütecharakteristik (64) des zumindest einen zweiten Paketdatendienstes (61) unterscheidet;
Zuordnen (407), zu dem Aggregat von Paketdatendiensten (500; 600) des ersten Paketdatendienstes (51) und des zumindest einen zweiten Paketdatendienstes (61), des zumindest einen dritten Paketdatendienstes (71), wobei der erste aggregierte Wert (502; 602) der ersten Dienstgütecharakteristik (501; 601) des Aggregats von Paketdatendiensten (500; 600) der erste Wert (53) der ersten Dienstgütecharakteristik (54) des ersten Paketdatendienstes (51) ist, wobei der zweite aggregierte Wert (504; 604) der zumindest einen zweiten aggregierten Dienstgütecharakteristik (503; 603) derjenige ist, zwischen dem zweiten Wert (55) der zweiten Dienstgütecharakteristik (54) des ersten Paketdatendienstes (51), dem weiteren zweiten Wert (65) der weiteren zweiten Dienstgütecharakteristik (64) des zumindest einen zweiten Paketdatendienstes (61) und dem weiteren zweiten Wert (75) der weiteren zweiten Dienstgütecharakteristik (74) des zumindest einen dritten Paketdatendienstes (71), der geeignet ist, um die Verwendung des ersten Paketdatendienstes (51), des zumindest einen zweiten Paketdatendienstes (61) und des zumindest einen dritten Datendienstes (71) sicherzustellen, sowohl wenn der erste Paketdatendienst (51), der zumindest eine zweite Paketdatendienst (61) und der zumindest eine dritte Paketdatendienst (71) innerhalb des Aggregats von Paketdatendiensten (500; 600) übertragen werden, als auch wenn der erste Paketdatendienst (51), der zumindest eine zweite Paketdatendienst (61) und der zumindest eine dritte Paketdatendienst (71) einzeln innerhalb eines entsprechenden Transporttunnels übertragen werden, der einen entsprechenden Standardtyp-QCI-Identifizierer aufweist.

5. Das Verfahren (400) gemäß Anspruch 4, bei dem die erste Dienstgütecharakteristik (52) des ersten Paketdatendienstes (51), die weitere erste Dienstgütecharakteristik (62) des zumindest einen zweiten Paketdatendienstes (61) und die weitere erste Dienstgütecharakteristik (72) des zumindest einen dritten Paketdatendienstes (71) ein Datenübertragungsbandtyp (GBR, Nicht-GBR) sind.

6. Das Verfahren (400) gemäß Anspruch 5, bei dem die zweite Dienstgütecharakteristik (54) des ersten Paketdatendienstes (51), die weitere zweite Dienstgütecharakteristik (64) des zumindest einen zweiten Paketdatendienstes (61) und die weitere zweite Dienstgütecharakteristik (74) des zumindest einen dritten Paketdatendienstes (71) die maximale bei der Datenübertragung erlaubte Verzögerung (PDB) sind.

7. Das Verfahren (400) gemäß Anspruch 6, bei dem der zumindest eine dritte Paketdatendienst (71) durch eine weitere dritte Dienstgütecharakteristik (76) mit einem entsprechenden weiteren dritten Wert (77) definiert ist, wobei die dritte Dienstgütecharakteristik (56) des ersten Paketdatendienstes (51), die weitere dritte Dienstgütecharakteristik (66) des zumindest einen zweiten Paketdatendienstes (61) und die weitere dritte Dienstgütecharakteristik (76) des zumindest einen dritten Paketdatendienstes (71) die maximal erlaubte Datenpaketverlustebene auf eine Datenübertragung hin (PELR) sind.

8. Das Verfahren (400) gemäß Anspruch 7, bei dem der zumindest eine dritte Paketdatendienst (71) durch eine weitere vierte Dienstgütecharakteristik (78) mit einem entsprechenden weiteren vierten Wert (79) definiert ist, wobei die vierte Dienstgütecharakteristik (58) des ersten Paketdatendienstes (51), die weitere vierte Dienstgütecharakteristik (68) des zumindest einen zweiten Paketdatendienstes (61) und die weitere vierte Dienstgütecharakteristik (78) des zumindest einen dritten Paketdatendienstes (71) die Prioritätsebene auf eine Datenübertragung hin (PRIO) sind.

9. Das Verfahren (400) gemäß einem der vorhergehenden Ansprüche, das einen Schritt des Zuordnens (410), zu dem zumindest einen Aggregat von Paketdatendiensten (500, 600), eines entsprechenden Werts der Zuordnungsprioritätsebene (ARP) eines solchen Aggregats von Paketdatendiensten (500; 600) auf der Funkebene aufweist.

10. Das Verfahren (400) gemäß Anspruch 9, das einen Schritt des Zuordnens (411), zu dem zumindest einen Aggregat von Paketdatendiensten (500; 600), mit dem zugeordneten entsprechenden Wert der Zuordnungsprioritätsebene (ARP) eines solchen Aggregats von Paketdatendiensten (500; 600) auf der Funkebene, eines zweiten Booleschen Werts aufweist, der der Prioritätsgebungsfähigkeit eines solchen Aggregats von Paketdatendiensten (500; 600) während der Datenübertragung in dem Fall darstellt, dass ein weiteres Aggregat von Paketdatendiensten (500; 600) vorliegt, oder ein Datendienst, der einzeln innerhalb eines entsprechenden Transporttunnels übertragen wird, der einen entsprechenden Standardtyp-QCI-Identifizierer aufweist, mit einem zugeordneten entsprechenden Wert der Zuordnungsprioritätsebene (ARP) eines solchen weiteren Aggregats von Paketdatendiensten (500; 600) oder des Datendiensts, der einzeln innerhalb eines entsprechenden Transporttunnels übertragen wird, der einen entsprechenden Standardtyp-QCI-Identifizierer aufweist, auf die Datenübertragung auf der Funkebene hin, der niedriger ist als der Wert der Zuordnungsprioritätsebene (ARP), die solch einem zumindest einen Aggregat von Paketdatendiensten (500; 600) auf der Funkebene zugeordnet ist.

11. Das Verfahren (400) gemäß Anspruch 10, das ferner den Schritt des Zuordnens (412), zu dem zumindest einen Aggregat von Paketdatendiensten (500; 600), mit dem zugeordneten Wert der Zuordnungsprioritätsebene (ARP) eines solchen Aggregats von Paketdatendiensten (500; 600) auf der Funkebene, eines dritten Booleschen Werts aufweist, der die Prioritätsgebungsverletzbarkeit eines solchen Aggregats von Paketdatendiensten (500; 600) während der Datenübertragung in dem Fall darstellt, dass das weitere Aggregat von Paketdatendiensten (500; 600) vorliegt, oder ein Paketdatendienst, der einzeln innerhalb eines entsprechenden Transporttunnels übertragen wird, der einen entsprechenden Standardtyp-QCI-Identifizierer aufweist, mit einem zugeordneten entsprechenden Wert des Zuordnungsprioritätsebene (ARP) eines solchen weiteren Aggregats von Paketdatendiensten (500; 600), oder des Datendienstes, der einzeln innerhalb eines entsprechenden Transporttunnels übertragen wird, der einen entsprechenden Standardtyp-QCI-Identifizierer aufweist, auf eine Datenübertragung auf der Funkebene hin, der höher ist als der Wert der Zuordnungsprioritätsebene (ARP), die solch einem zumindest einen Aggregat von Paketdatendiensten (500; 600) auf der Funkebene zugeordnet ist.

12. Eine LTE-Technologie-Netzwerkarchitektur (100), die folgende Merkmale aufweist:
zumindest eine Nutzerausrüstung UE (1);
ein E-UTRAN-Zugriffsnetzwerk (2), das zumindest eine erste Zugriffsnetzwerkvorrichtung eNodeB (3, 3') aufweist, wobei die Nutzerausrüstung UE (1) ausgebildet ist, um wirksam mit der zumindest einen ersten Zugriffsnetzwerkvorrichtung eNodeB (3, 3') verbunden zu sein;
ein Paketdatenverkehrsverwaltungsnetzwerk EPC (4), das wirksam mit dem E-UTRAN-Zugriffsnetzwerk (2) verbunden ist, wobei das Datenverkehrsverwaltungsnetzwerk EPC (4) folgende Merkmale aufweist:
zumindest ein erstes Datenverkehrverwaltungsgateway (7, 9);
zumindest ein Paketdatendienstnetwerk PDN (8), das konfiguriert ist, um Paketdatendienste auf Anforderung durch einen Nutzer bereitzustellen, wobei das Paketdatenverkehrsverwaltungsnetzwerk EPC (4) wirksam zwischen dem E-UTRAN-Zugriffsnetzwerk (2) und dem Paketdatendienstnetzwerk PDN (8) angeordnet ist, wobei das zumindest eine erste Datenverkehrsverwaltungsgateway (7, 9) wirksam zwischen der zumindest einen ersten Zugriffsnetzwerkvorrichtung eNodeB (3, 3') und dem zumindest einen Datendienstnetzwerk PDN (8) angeordnet ist,
wobei das zumindest eine erste Datenverkehrsverwaltungsgateway (7, 9) konfiguriert ist für die Verwaltung von Transporttunneln von Paketdatendiensten gemäß dem Verwaltungsverfahren (400) gemäß einem der vorhergehenden Ansprüche 1-11.

13. Die Netzwerkarchitektur (100) gemäß Anspruch 12, bei der das Paketdatenverkehrsverwaltungsnetzwerk EPC ferner zumindest ein zweites Datenverkehrsverwaltungsgateway (9) aufweist, wobei das zumindest eine zweite Datenverkehrsverwaltungsgateway (9) wirksam zwischen dem zumindest einen ersten Datenverkehrsverwaltungsgateway (7) und dem zumindest einen Paketdatendienstnetzwerk PDN (8) angeordnet ist, wobei das zumindest eine zweite Datenverkehrsverwaltungsgateway (9) konfiguriert ist für die Verwaltung von Transporttunneln von Paketdatendiensten gemäß dem Verwaltungsverfahren (400) gemäß einem der vorhergehenden Ansprüche 1-11.

## Revendications

1. Procédé (400) de gestion de tunnels de transport (b1-b3, b1'-b3') de services de données par paquets utilisables par un utilisateur dans un réseau de télécommunications en technologie LTE (100), chaque service de données par paquets étant défini par des caractéristiques spécifiées de qualité de service présentant des valeurs spécifiées, le procédé (400) comprenant les étapes consistant à :
- identifier (401) un premier service de données par paquets (51) défini par une première caractéristique spécifiée de qualité de service (52) présentant une première valeur spécifiée (53), ledit premier service de données (51) étant défini par au moins une deuxième caractéristique spécifiée de qualité de service (54) présentant une deuxième valeur (55) correspondante ;
- identifier (402) au moins un deuxième service de données par paquets (61) défini par une première caractéristique spécifiée supplémentaire de qualité de service (62) présentant une première valeur supplémentaire (63) correspondante, ladite première valeur supplémentaire (63) étant égale à la première valeur spécifiée (53) de la première caractéristique de qualité de service (52) du premier service de données par paquets (51), ledit au moins un deuxième service de données par paquets (61) étant défini par au moins une deuxième caractéristique supplémentaire de qualité de service (64) présentant une deuxième valeur supplémentaire (65) correspondante, ladite deuxième valeur supplémentaire (65) de ladite au moins une deuxième caractéristique supplémentaire de qualité de service (64) dudit au moins un deuxième service de données par paquets (61) étant différente de la deuxième valeur spécifiée (55) de ladite deuxième caractéristique de qualité de service (54) du premier service de données par paquets (51) ;
- définir (403) un agrégat de services de données par paquets (500 ; 600) comprenant le premier service de données par paquets (51) et ledit au moins un deuxième service de données par paquets (61) ;
- associer (404) l'agrégat de services de données par paquets (500 ; 600) à un tunnel de transport de services de données (b1-b3, b1'-b3'), le procédé étant **caractérisé par** :
- la définition (405) d'un identifiant QCI agrégé représentatif du tunnel de transport de services de données (b1-b3, b1'-b3') associé audit agrégat de services de données par paquets (500 ; 600) ;
ledit agrégat de services de données par paquets (500 ; 600) étant défini par une première caractéristique agrégée de qualité de service (501 ; 601) présentant une première valeur agrégée (502 ; 602) correspondante et au moins une deuxième caractéristique agrégée de qualité de service (503 ; 603) présentant une deuxième valeur agrégée (504 ; 604) correspondante, ladite première valeur agrégée (502 ; 602) de la première caractéristique agrégée de qualité de service (502 ; 602) de l'agrégat de services de données par paquets (500 ; 600) étant la première valeur (53) de la première caractéristique de la qualité de service (52) du premier service de données (51), ladite deuxième valeur agrégée (504 ; 604) de ladite au moins une deuxième caractéristique agrégée de qualité de service (503 ; 603) de l'agrégat de services de données par paquets (500 ; 600) étant celle, entre la deuxième valeur (55) de la deuxième caractéristique de qualité de service (54) du premier service de données (51) et la deuxième valeur supplémentaire (65) de la deuxième caractéristique supplémentaire de qualité de service (64) dudit au moins un deuxième service de données (61), adaptée pour garantir l'utilisation des deux du premier service de données par paquets (51) et dudit au moins un deuxième service de données par paquets (61) aussi bien lorsque le premier service de données par paquets (51) et ledit au moins un deuxième service de données par paquets (61) sont émis au sein de l'agrégat de services de données par paquets (500 ; 600) que lorsque le premier service de données par paquets (51) et ledit au moins un deuxième service de données par paquets (61) sont émis individuellement à l'intérieur d'un tunnel de transport correspondant doté d'un identifiant QCI correspondant du type standard,
- l'association (408) à chaque service de données par paquets (51, 61, 71) d'une valeur numérale DSCP (D1, D2, D3) correspondante représentative du niveau de priorité d'un tel service de données par paquets (51, 61, 71) lors de la transmission de données au niveau du réseau de transport IP,
dans le cas où le premier service de données par paquets (51), avec une première valeur numérale DSCP (D1) correspondante associée représentative du niveau de priorité d'un tel premier service de données par paquets (51) lors de la transmission de données au niveau du réseau de transport IP, et ledit au moins un deuxième service de données par paquets (61), avec une seconde valeur numérale DSCP (D2) associée représentative du niveau de priorité dudit au moins un deuxième service de données par paquets (61) lors de la transmission de données au niveau du réseau de transport IP, sont agrégés dans l'agrégat de services de données par paquets (500 ; 600), le procédé (400) comprenant en outre une étape consistant à associer (409) à l'agrégat de services de données par paquets (500 ; 600) une valeur numérale DSCP (DA1) correspondante représentative du niveau de priorité d'un tel agrégat de services de données par paquets (500 ; 600) lors de la transmission de données au niveau du réseau de transport IP, sélectionnée entre ladite première valeur numérale DSCP (D1) représentative du niveau de priorité d'un tel premier service de données par paquets (51) lors de la transmission de données au niveau du réseau de transport IP et ladite seconde valeur numérale DSCP (D2) représentative du niveau de priorité dudit au moins un deuxième service de données par paquets (61) lors de la transmission de données au niveau du réseau de transport IP.

2. Procédé (400) selon la revendication 1, dans lequel ledit premier service de données par paquets (51) est défini par au moins une troisième caractéristique de qualité de service (56) présentant une troisième valeur (57) correspondante, ledit au moins un deuxième service de données par paquets (61) étant défini par au moins une troisième caractéristique supplémentaire de qualité de service (66) présentant une troisième valeur supplémentaire (67) correspondante, l'agrégat de services de données par paquets (500 ; 600) étant en outre défini par une troisième caractéristique agrégée de qualité de service (505 ; 605) de l'agrégat de services de données par paquets (500 ; 600) présentant une troisième valeur agrégée (506 ; 606) correspondante, la troisième valeur agrégée (506 ; 606) de ladite au moins une troisième caractéristique agrégée de qualité de service (505 ; 605) de l'agrégat de services de données par paquets (500 ; 600) étant celle, entre la troisième valeur (55) de la troisième caractéristique de qualité de service (56) du premier service de données par paquets (51) et la troisième valeur supplémentaire (67) de la troisième caractéristique supplémentaire de qualité de service (66) dudit au moins un deuxième service de données par paquets (61), adaptée pour garantir l'utilisation des deux du premier service de données par paquets (51) et dudit au moins un deuxième service de données par paquets (61) aussi bien lorsqu'ils sont émis au sein de l'agrégat de services de données par paquets (500 ; 600) que lorsque le premier service de données par paquets (51) et ledit au moins un deuxième service de données par paquets (61) sont émis individuellement à l'intérieur d'un tunnel de transport correspondant doté d'un identifiant QCI correspondant du type standard.

3. Procédé (400) selon la revendication 2, dans lequel ledit premier service de données par paquets (51) est défini par au moins une quatrième caractéristique de qualité de service (58) présentant une quatrième valeur (59) correspondante, ledit au moins un deuxième service de données par paquets (61) étant défini par au moins une quatrième caractéristique supplémentaire de qualité de service (68) présentant une quatrième valeur supplémentaire (69) correspondante, l'agrégat de services de données par paquets (500 ; 600) étant défini par une quatrième caractéristique agrégée de qualité de service (507 ; 607) présentant une quatrième valeur agrégée (508 ; 608) correspondante, la quatrième valeur agrégée (508 ; 608) de ladite au moins une quatrième caractéristique agrégée de qualité de service (507 ; 607) de l'agrégat de services de données par paquets (500 ; 600) étant celle, entre la quatrième valeur (59) de la quatrième caractéristique de qualité de service (58) du premier service de données par paquets (51) et la quatrième valeur supplémentaire (69) de la quatrième caractéristique supplémentaire de qualité de service (68) dudit au moins un deuxième service de données par paquets (61), adaptée pour garantir l'utilisation des deux du premier service de données (51) et dudit au moins un deuxième service de données (61) aussi bien lorsque le premier service de données (51) et ledit au moins un deuxième service de données (61) sont émis au sein de l'agrégat de services de données par paquets (500 ; 600) que lorsque le premier service de données (51) et ledit au moins un deuxième service de données (61) sont émis individuellement à l'intérieur d'un tunnel de transport correspondant doté d'un identifiant QCI correspondant du type standard.

4. Procédé (400) selon la revendication 3, comprenant en outre l'étape consistant à :
- identifier (406) au moins un troisième service de données par paquets (71) défini par une première caractéristique supplémentaire de qualité de service (72) présentant une première valeur supplémentaire (73) correspondante, ladite première valeur supplémentaire (73) étant égale à la première valeur déterminée (53) de la première caractéristique de qualité de service (52) du premier service de données (51), ledit au moins un troisième service de données par paquets (71) étant défini par au moins une deuxième caractéristique supplémentaire de qualité de service (74) présentant une deuxième valeur supplémentaire (75) correspondante, la deuxième valeur supplémentaire (75) de ladite au moins une deuxième caractéristique supplémentaire de qualité de service (74) dudit au moins un troisième service de données par paquets (71) étant différente d'au moins l'une de la deuxième valeur (55) de ladite deuxième caractéristique de qualité de service (54) du premier service de données par paquets (51) et de la deuxième valeur supplémentaire (65) de ladite au moins une deuxième caractéristique supplémentaire de qualité de service (64) dudit au moins un deuxième service de données par paquets (61) ;
- associer (407), à l'agrégat de services de données par paquets (500 ; 600) du premier service de données par paquets (51) et dudit au moins un deuxième service de données par paquets (61), ledit au moins un troisième service de données par paquets (71), la première valeur agrégée (502, 602) de ladite première caractéristique de qualité de service (501 ; 601) de l'agrégat de services de données par paquets (500 ; 600) étant la première valeur (53) de la première caractéristique de qualité de service (54) du premier service de données par paquets (51), la deuxième valeur agrégée (504, 604) de ladite au moins une deuxième caractéristique agrégée de qualité de service (503 ; 603) étant celle, entre la deuxième valeur (55) de la deuxième caractéristique de qualité de service (54) du premier service de données par paquets (51), la deuxième valeur supplémentaire (65) de la deuxième caractéristique supplémentaire de qualité de service (64) dudit au moins un deuxième service de données par paquets (61) et la deuxième valeur supplémentaire (75) de la deuxième caractéristique supplémentaire de qualité de service (74) dudit au moins un troisième service de données par paquets (71), adaptée pour garantir l'utilisation du premier service de données par paquets (51), dudit au moins un deuxième service de données par paquets (61) et dudit au moins un troisième service de données (71) aussi bien lorsque le premier service de données par paquets (51), ledit au moins un deuxième service de données par paquets (61) et ledit au moins un troisième service de données par paquets (71) sont émis au sein de l'agrégat de services de données par paquets (500 ; 600) que lorsque le premier service de données par paquets (51), ledit au moins un deuxième service de données par paquets (61) et ledit au moins un troisième service de données par paquets (71) sont émis individuellement à l'intérieur d'un tunnel de transport correspondant doté d'un identifiant QCI correspondant du type standard.

5. Procédé (400) selon la revendication 4, dans lequel la première caractéristique de qualité de service (52) du premier service de données par paquets (51), la première caractéristique supplémentaire de qualité de service (62) dudit au moins un deuxième service de données par paquets (61) et la première caractéristique supplémentaire de qualité de service (72) dudit au moins un troisième service de données par paquets (71) sont un type de bande de transmission de données (GBR, non GBR).

6. Procédé (400) selon la revendication 5, dans lequel la deuxième caractéristique de qualité de service (54) du premier service de données par paquets (51), la deuxième caractéristique supplémentaire de qualité de service (64) dudit au moins un deuxième service de données par paquets (61) et la deuxième caractéristique supplémentaire de qualité de service (74) dudit au moins un troisième service de données par paquets (71) sont le délai maximum autorisé lors de la transmission de données (PDB).

7. Procédé (400) selon la revendication 6, dans lequel ledit au moins un troisième service de données par paquets (71) est défini par une troisième caractéristique supplémentaire de qualité de service (76) présentant une troisième valeur supplémentaire (77) correspondante, la troisième caractéristique de qualité de service (56) du premier service de données par paquets (51), la troisième caractéristique supplémentaire de qualité de service (66) dudit au moins un deuxième service de données par paquets (61) et la troisième caractéristique supplémentaire de qualité de service (76) dudit au moins un troisième service de données par paquets (71) étant le niveau maximum autorisé de perte de paquets de données lors de la transmission de données (PELR).

8. Procédé (400) selon la revendication 7, dans lequel ledit au moins un troisième service de données par paquets (71) est défini par une quatrième caractéristique supplémentaire de qualité de service (78) présentant une quatrième valeur supplémentaire (79) correspondante, la quatrième caractéristique de qualité de service (58) du premier service de données par paquets (51), la quatrième caractéristique supplémentaire de qualité de service (68) dudit au moins un deuxième service de données par paquets (61) et la quatrième caractéristique supplémentaire de qualité de service (78) dudit au moins un troisième service de données par paquets (71) étant le niveau de priorité lors de la transmission de données (PRIO).

9. Procédé (400) selon l'une quelconque des revendications précédentes, comprenant une étape consistant à associer (410) audit au moins agrégat de services de données par paquets (500 ; 600) une valeur correspondante de niveau de priorité d'attribution (ARP) d'un tel agrégat de services de données par paquets (500 ; 600) au niveau radio.

10. Procédé (400) selon la revendication 9, comprenant une étape consistant à associer (411) audit au moins un agrégat de services de données par paquets (500 ; 600), avec la valeur correspondante associée de niveau de priorité d'attribution (ARP) d'un tel agrégat de services de données par paquets (500 ; 600) au niveau radio, une deuxième valeur booléenne représentative de la capacité de préemption d'un tel agrégat de services de données par paquets (500 ; 600) durant la transmission de données dans le cas où un agrégat supplémentaire de services de données par paquets (500 ; 600) est présent ou un service de données émis individuellement à l'intérieur d'un tunnel de transport correspondant doté d'un identifiant QCI correspondant du type standard, avec une valeur correspondante associée de niveau de priorité d'attribution (ARP) d'un tel agrégat supplémentaire de services de données par paquets (500 ; 600) ou du service de données émis individuellement à l'intérieur d'un tunnel de transport correspondant doté d'un identifiant QCI correspondant du type standard lors de la transmission de données au niveau radio, qui est inférieure à la valeur de niveau de priorité d'attribution (ARP) associée à un tel au moins un agrégat de services de données par paquets (500 ; 600) au niveau radio.

11. Procédé (400) selon la revendication 10, comprenant en outre l'étape consistant à associer (412) audit au moins un agrégat de services de données par paquets (500 ; 600), avec la valeur associée de niveau de priorité d'attribution (ARP) d'un tel agrégat de services de données par paquets (500 ; 600) au niveau radio, une troisième valeur booléenne représentative de la vulnérabilité de préemption d'un tel agrégat de services de données par paquets (500 ; 600) durant la transmission de données dans le cas où l'agrégat supplémentaire de services de données par paquets (500 ; 600) est présent, ou un service de données par paquets émis individuellement à l'intérieur d'un tunnel de transport correspondant doté d'un identifiant QCI correspondant du type standard, avec une valeur correspondante associée de niveau de priorité d'attribution (ARP) d'un tel agrégat supplémentaire de services de données par paquets (500 ; 600) ou du service de données émis individuellement à l'intérieur d'un tunnel de transport correspondant doté d'un identifiant QCI correspondant du type standard lors de la transmission de données au niveau radio, qui est supérieure à la valeur de niveau de priorité d'attribution (ARP) associée à un tel au moins un agrégat de services de données par paquets (500 ; 600) au niveau radio.

12. Architecture de réseau en technologie LTE (100), comprenant :
- au moins un équipement utilisateur UE (1) ;
- un réseau d'accès E-UTRAN (2) comprenant au moins un premier appareil de réseau d'accès eNodeB (3, 3'), ledit équipement utilisateur UE (1) étant configuré pour être relié de manière opérationnelle audit au moins un premier appareil de réseau d'accès eNodeB (3, 3') ;
- un réseau de gestion de trafic de données par paquets EPC (4) relié de manière opérationnelle audit réseau d'accès E-UTRAN (2), ledit réseau de gestion de trafic de données EPC (4) comprenant :
- au moins une première passerelle de gestion de trafic de données (7, 9) ;
- au moins un réseau de services de données par paquets PDN (8) configuré pour fournir des services de données par paquets sur demande par un utilisateur, ledit réseau de gestion de trafic de données par paquets EPC (4) étant interposé de manière opérationnelle entre le réseau d'accès E-UTRAN (2) et le réseau de services de données par paquets PDN (8), ladite au moins une première passerelle de gestion de trafic de données (7, 9) étant interposée de manière opérationnelle entre ledit au moins un premier appareil de réseau d'accès eNodeB (3, 3') et ledit au moins un réseau de services de données PDN (8),
ladite au moins une première passerelle de gestion de trafic de données (7, 9) étant configurée pour la gestion de tunnels de transport de services de données par paquets conformément au procédé de gestion (400) selon l'une quelconque des revendications précédentes 1 à 11.

13. Architecture de réseau (100) selon la revendication 12, dans laquelle ledit réseau de gestion de trafic de données par paquets (EPC) comprend en outre au moins une seconde passerelle de gestion de trafic de données (9), ladite au moins une seconde passerelle de gestion de trafic de données (9) étant interposée de manière opérationnelle entre ladite au moins une première passerelle de gestion de trafic de données (7) et ledit au moins un premier réseau de services de données par paquets PDN (8), ladite au moins une seconde passerelle de gestion de trafic de données (9) étant configurée pour la gestion de tunnels de transport de services de données par paquets conformément au procédé de gestion (400) selon l'une quelconque des revendications précédentes 1 à 11.
